# EUROPEAN PATENT APPLICATION

(11) **EP 2 079 028 A1**
(43) Date of publication of application: **15.07.2009**
(21) Application number: 09150228.6
(22) Date of filing: 25.01.2002
(51) Int. Cl.: G06F 17/30

(54) **Apparatus, method, and system for providing DRM protected content with content permanence**

(30) Priority: 08.02.2001 US 267875 P; 09.02.2001 US 267899 P; 09.10.2001 US 328270 P; 09.10.2001 US 328274 P; 09.10.2001 US 328275 P; 10.07.2001 US 303768 P; 14.02.2001 US 268766 P; 16.03.2001 US 276459 P; 21.02.2001 US 270473 P; 25.01.2001 US 264333 P; 29.03.2001 US 279792 P
(62) Divisional of application: 02709190.9
(71) Applicant: Content Directions, Inc., Brooklyn NY 11215 (US)
(72) Inventor: Sidman, David, Brooklyn, NY 11215 (US)
(74) Representative: Fennell, Gareth Charles

(57) **Abstract**

Digital rights management (DRM) and content distribution systems need to reference unique works of authorship to facilitate distribution, access control, and usage tracking and reporting of the works. The apparatus, method, and system disclosed herein is a DRM and content distribution system that uses the digital object identifier (DOI) as a unique identifier for the works of authorship that are the subject of transactions within the system and that travel with the instantiations of the works of authorship. A method of accessing a digital work from a computer is disclosed. The method associates at least one usage right with the digital work to create a protected digital work. The usage rights include displaying the digital work, copying the digital work, forwarding the digital work to another computer, or printing the digital work. The method selects a unique identifier such as a DOI for the digital work and stores the protected digital work and the unique identifier in a directory such as a library of digital works of authorship or a portion of a peer-to-peer network. The method issues a query from the computer to the directory to generate a result set that includes the unique identifier. The method uses the unique identifier to retrieve the protected digital work from the directory. Furthermore, a method is taught to employ multiple resolution capabilities for the super-distribution of DOI referenced content via E-mail and otherwise.

## Description

### RELATED APPLICATION

The instant application hereby claims priority to the following US provisional patent applications: (1) serial number 60/264,333 for "Reference Linking with DOIs" filed on January 25, 2001 (attorney docket number 4188-4001); (2) serial number 60/268,766 for "Apparatus, Method, and System for Multiple Resolution Affecting Information Access" filed on February 14, 2001 (attorney docket number 4188-4002); (3) serial number 60/276,459 for "Apparatus, Method, and System for Registration Effecting Information Access" filed on March 16, 2001 (attorney docket number 4188-4003); (4) serial number 60/279,792 for "Apparatus, Method and System For Directory Quality Assurance" filed on March 29, 2001 (attorney docket number 4188-4004); (5) serial number 60/303,768 for "Apparatus, Method, and System for Accessing Digital Rights Management Information" filed on July 10, 2001 (attorney docket number 4188-4005); (6) serial number 60/328,275 for "Apparatus, Method and System For Accessing Digital Rights Management Information" filed on October 9,2001 (attorney docket number 4188-4005US 1); (7) serial number 60/267,875 for "Apparatus, Method, and System for Accessing Information" filed on February 8, 2001 (attorney docket number 4188-4006); (8) serial number 60/267,899 for "Provisional filing for Apparatus, Method, and System for Accessing Information" filed on February 9, 2001 (attorney docket number 4188-4007); (9) serial number 60/270,473 for "Business Value and Implementation Considerations For The DOI" filed on February 21, 2001 (attorney docket number 4188-4008); (10) serial number 60/328,274 for "Apparatus, Method And System For Effecting Information Access In A Peer Environment" filed on October 9,2001 (attorney docket number 4188-4010); (11) serial number 60/328,270 for "Apparatus, Method and System For Tracking Information Access" filed on October 9,2001 (attorney docket number 4188-4011); each of these applications being herein incorporated by reference.

The instant application, also, hereby incorporates by reference the following Patent Cooperation Treaty applications: (12) for an "Apparatus, Method and System For Multiple Resolution Affecting Information Access" (attorney docket number 4188-4002PC), which was filed on January 25, 2002 in the name of David Sidman; (13) for an "Apparatus, Method and System For Registration Effecting Information Access" (attorney docket number 4188-4003PC), which was filed on January 25, 2002 in the name of David Sidman; (14) for an "Apparatus, Method and System For Directory Quality Assurance" (attorney docket number 4188-4004PC), which was filed on January 25, 2002 in the name of David Sidman; (15) for an "Apparatus, Method and System For Effecting Information Access in a Peer Environment," (attorney docket number 4188-4010PC), which was filed on January 25, 2002 in the name of David Sidman; and (16) for an "Apparatus, Method and System For Tracking Information Access," (attorney docket number 4188-4011PC), which was filed on January 25, 2002 in the name of David Sidman.

### FIELD

An apparatus, method, and system for accessing a digitized work of authorship protected by a digital rights management system is disclosed. In particular, the apparatus, method, and system integrates digital object identifiers into the digital rights management system to make the system more durable and provide multiple resolution, reporting, watermarking, and validation capabilities.

### BACKGROUND OF THE INVENTION

### Internet

As Internet usage increases, the amount of information available on the Internet also increases. The information that exists on the Internet is of many different types, including documents in many formats such as: computer software, databases, discussion lists, electronic journals, library catalogues, online information services, mailing lists, news groups, streaming media, and the like. Fortunately, much of the information on the Internet can be accessed through the World-Wide-Web using a web browser to interact with the network in a user-friendly way.

### Networks

Networks are commonly thought to consist of the interconnection and interoperation of clients, servers, and intermediary nodes in a graph topology. It should be noted that the term "server" as used herein refers generally to a computer, other device, software, or combination thereof that processes and responds to the requests of remote users across a communications network. Servers serve their information to requesting "clients." A computer, other device, software, or combination thereof that facilitates, processes information and requests, and/or furthers the passage of information from a source user to a destination user is commonly referred to as a "node." Networks are generally thought to facilitate the transfer of information from source points to destinations.

### Transmission Control Protocol/Internet Protocol (TCP/IP)

The proliferation and expansion of computer systems, databases, and networks of computers has been facilitated by an interconnection of such systems and networks in an extraterritorial communications network commonly referred to as the Internet. The Internet has developed and largely employs the Transmission Control Protocol-Internet Protocol (TCP/IP). TCP/IP was developed by a Department of Defense (DoD) research project to interconnect networks made by various and varying network vendors as a foundation for a network of networks, i.e., the Internet. The development of TCP/IP was in part driven by a requirement by the DoD to have a network that will continue to operate even if damaged during battle, thus allowing for information to be routed around damaged portions of the communications network to destination addresses. Of course, if the source or destination address location itself is rendered inoperable, such delivery will not be possible.

The Internet is a packet-switched network and thus, information on the Internet is broken up into pieces, called packets, and transmitted in packet form. The packets contain IP addressing information called headers, which are used by routers to facilitate the delivery of the packets from a source to a destination across intermediary nodes on the Internet. Upon arrival at the destination, the packets are reassembled to form the original message, and any missing packets are requested again.

The IP component of the protocol is responsible for routing packets of information based on a four byte addressing mechanism; the address is written as four numbers separated by dots, each number ranging from 0 to 25 5, e.g., "123.255.0.123". IP addresses are assigned by Internet authorities and registration agencies, and are unique.

The TCP portion of the protocol is used for verifying that packets of information are correctly received by the destination computer from the source, and if not, to retransmit corrupt packets. Other transmission control protocols are also commonly used that do not guarantee delivery, such as User Datagram Protocol (UDP).

### World-Wide-Web

The proliferation and expansion of the Internet, and particularly the World-Wide-Web (the web), have resulted in a vast and diverse collection of information. Various user interfaces that facilitate the interaction of users with information technology systems (i.e., people using computers) are currently in use. An information navigation interface called WorldWideWeb.app (the web) was developed in late 1990. Subsequently, information navigation interfaces such as web browsers have become widely available on almost every computer operating system platform.

Generally, the web is the manifestation and result of a synergetic interoperation between user interfaces (e.g., web browsers), servers, distributed information, protocols, and specifications. Web browsers were designed to facilitate navigation and access to information, while information servers were designed to facilitate provision of information. Typically, web browsers and information servers are disposed in communication with one another through a communications nerwork. Information Servers function to serve information to users that typically access the information by way of web browsers. As such, information servers typically provide information to users employing web browsers for navigating and accessing information on the web. Microsoft's Internet Explorer and Netscape Navigator are examples of web browsers. In addition, navigation user interface devices such as WebTV have also been implemented to facilitate web navigation. Microsoft's Information Server and Apache are examples of information servers.

### Universal Resource Locator (URL)

The expansion of the web has resulted in an enormous quantity of information, which is accessible through the use of Universal Resource Locators (URLs). An URL is an address that is typically embodied as a hyperlink in a web page or is typed into a web browser. URLs for a given resource (most commonly a file located on a remote computer) refer only to a location for that resource. Typically, the reference to the location is achieved through the use of an unresolved IP address in conjunction with a directory path and file name; e.g., "http://www.aWebSite.com/aFolder/aFile.html". In this example, the URL directs the browser to connect to the computer named "www" in the domain "aWebSite.com," and to request the file named "aFile.html" stored in directory "aFolder" at that computer.

### Universal Name Identifier (UNI)

The Corporation for National Research Initiatives has created and implemented a new means of naming and locating information, called the Handle System. The Handle System is designed to improve upon the current use of URLs.

The Handle System introduces a level of indirection to locating and distributing information over the Internet. The Handle System is a general-purpose system for naming resources. Instead of being assigned a URL based on a particular resource's current network location, a resource may be assigned a Universal Name Identifier- A UNI is a form of Universal Resource Identifier (URI). URIs include both UNIs and URLs. A UNI, unlike a URL, serves and shall be regarded henceforth as a name for the resource that is persistent regardless of changes in the resource's location or other attributes. In turn, a Universal Resource Name (URN) is a type of UNI (i.e., a UNI subsumes the concept of a URN). Furthermore, a Handle is a type of URN. And a Digital Object Identifier (DOI) is a type of Handle. Thus, various forms of UNIs include Handles, URNs, DOls, and/or the like. The various terms and/or formes of UNIs will be used interchangeably throughout this document, and may be assumed to be interchangeable unless stated otherwise. A Handle is a unique name that is registered with the Handle System along with the current network location of the named resource and the location of relevant associated services. This location information commonly takes the form of a URL. One common type of Handle is known as a Digital Object Identifier (DOI). Handles may be then distributed to users in lieu of a URL, and superficially appear to function similarly to a hyperlink. When a user encounters a Handle, the user may select or enter the Handle much like a URL hyperlink, so long as the user's web browser is capable of making Handle requests. Such an encounter triggers an automated process to look up a resource's current location. The current location of the resource is associated with the resource's Handle in a directory made available by the Handle System, which in turn directs the user to the resource's current location. The same process can be invoked to redirect users to services associated with an identified work. Unlike with a URL, if the resource or service moves, the Handle System directory entry can be updated, thereby assuring a persistent association between a Handle and the resources or services it identifies. Knowing only a URL for a given resource is akin, in the physical world, to knowing only a person's street address, and not her name. If she were to move across town, it would be very difficult to locate her without knowing her name. The Handle System allows resources to be permanently named by way of a Handle, and it allows the current network location of resources to be looked up based on that name in a Handle System directory.

### Digital Rights Management (DRM)

Digital Rights Management (DRM) involves the description, layering, analysis, valuation, trading, and monitoring of an owner's property rights to an asset. DRM covers the management of the digital rights to the physical manifestation of a work (e.g., a textbook) or the digital manifestation of a work (e.g., a Web page). DRM also covers the management of an asset whether the asset has a tangible or an intangible value. Current DRM systems include languages for describing the terms and conditions for use of an asset, tracking asset usage by enforcing controlled environments or encoded asset manifestations, and closed architectures for the overall management of the digital rights. Since the current DRM systems typically rely upon location-based identifiers such as the URL, the system is limited by the inflexibility of the location-based identifier.

Thus, there is a need for an apparatus, method, and system for reliably accessing a digitized work of authorship that is protected by a DRM system. The apparatus, method, and system disclosed herein improves the durability of a DRM system, provides additional capability to both the DRM customer and the content publisher, and promotes the growth of electronic commerce.

### SUMMARY OF THE INVENTION

Digital rights management (DRM) and content distribution systems need to reference unique works of authorship to facilitate distribution, access control, and usage tracking and reporting of the works. The apparatus, method, and system disclosed herein is a DRM and content distribution system that uses the digital object identifier (DOI) as a unique identifier for the works of authorship that are the subject of transactions within the system and that travel with the instantiations of the works of authorship.

A method of accessing a digital work from a computer is disclosed. The method associates at least one usage right with the digital work to create a protected digital work. The usage rights include displaying the digital work, copying the digital work, forwarding the digital work to another computer, or printing the digital work. The method selects a unique identifier such as a DOI for the digital work and stores the protected digital work and the unique identifier in a directory such as a library of digital works of authorship or a portion of a peer-to-peer network. The method issues a query from the computer to the directory to generate a result set that includes the unique identifier. The method uses the unique identifier to retrieve the protected digital work from the directory.

In another embodiment, the method encrypts the protected digital work using a prior art encryption algorithm and/or wraps the protected digital work with a secure container. The secure container can include a digital watermark using a prior art watermarking algorithm or can use a watermarking algorithm that includes the unique identifier associated with the digital work.

In another embodiment, the method stores metadata that describes the protected digital work and includes the metadata in the query from the computer. Furthermore, the query can originate from either a computer coupled to a user or from a third party such as a content distributor, a content syndicator, or a content aggregator.

### BRIEF DESCRIPTION OF THE DRAWINGS

The accompanying figures best illustrate the details of the apparatus, method, and system, for integrating digital object identifiers into a digital rights management system, both as to its structure and operation. Like reference numbers and designations in these figures refer to like elements.
Figure **1** illustrates one example embodiment incorporated into a Digital Rights Management (DRM) controller.
Figures **2** and **3** illustrate URL addressing across a communications network with moving information.
Figure **4** illustrates accessing of information through DOIs.
Figures **5** and **6** provide an overview of a Handle.
Figures **7** and **8** provide an overview of the resolution mechanism for allowing users to access desired information.
Figure **9** provides an overview of an exemplary sequence of actions that a user performs to access information using DOIs.
Figure **10** provides a more complete overview of an exemplary sequence of actions that users perform to access content information.
Figure **11** illustrates an exemplary mechanism for accessing information over a communications network.
Figure **12** provides an overview of another embodiment of exemplary mechanisms for retrieving information over a communications network.
Figure **13** provides an overview of an exemplary DOI registration system.
Figure **14** is a functional block diagram that illustrates the interaction between the parties involved in a traditional digital rights management scenario that uses digital object identifiers to increase the durability of the system.
Figure **15** is a functional block diagram that illustrates the integration of a watermark into the digital rights management scenario shown in Figure **14****.**
Figure **16A** is a flow diagram of an embodiment of the watermarking process shown in Figure **15** that results in a user opening a protected digital work.
Figure **16B** is a flow diagram of an embodiment of the watermarking process shown in Figure **15** that results in a user accessing a hacked digital work.
Figure **16C** is a flow diagram of an embodiment of the watermarking process shown in Figure **15** that results in a user accessing an informally distributed digital work.
Figure **17** is a functional block diagram that illustrates the integration of a validation architecture into the digital rights management scenario shown in Figure **14****.**
Figures **18** and **19** illustrate a schematic diagram of one non-limiting example embodiment of an interactive interface multiple resolution menu facility (MRMF)

### DETAILED DESCRIPTION OF THE INVENTION

### Digital Rights Management Controller

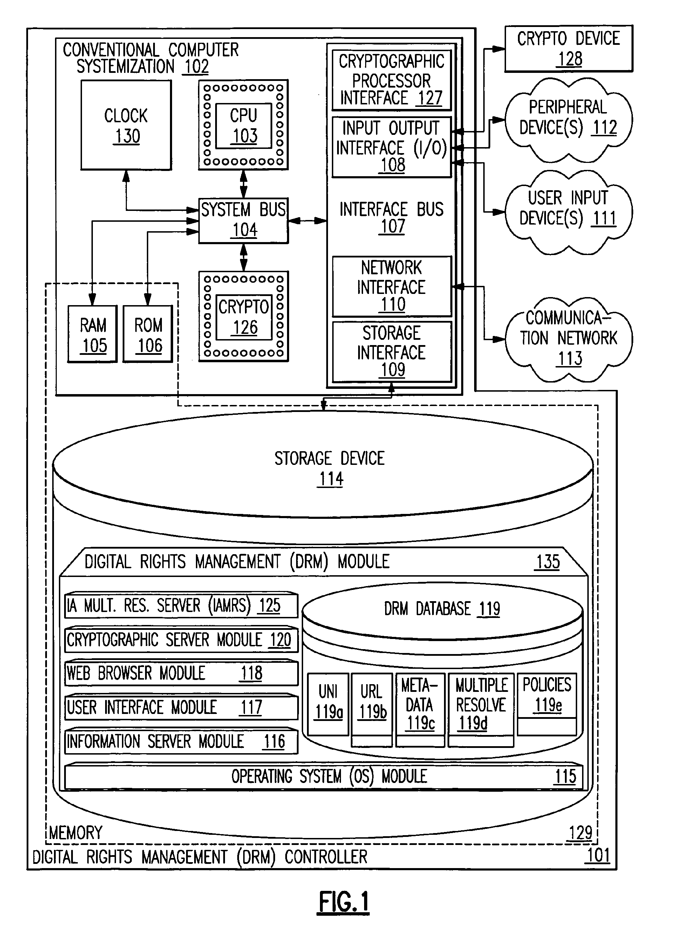

Figure **1** illustrates one example embodiment incorporated into Digital Rights Management System (DRMS) controller **101.** In this embodiment, DRM controller 101 may serve to register, resolve, process, store, update, and validate Handles and any associated information, and/or the like.

In one embodiment, DRM controller **101** may be connected to and/or communicate with entities such as, but not limited to, one or more users from user input devices **111,** peripheral devices **112,** communications network **113,** and/or the like. DRM controller **101** may even be connected to and/or communicate with cryptographic processor device **128.**

DRM controller **101** may typically be based on common computer systems that may comprise components such as, but not limited to, conventional computer systemization **102** connected to memory **129** and/or the like.

### Conventional Computer Systermization

Conventional computer systemization **102** may comprise clock **130,** central processing unit (CPU) **103,** read only memory (ROM) **106,** random access memory (RAM) **105,** interface bus **107** and/or the like. Conventionally, although not necessarily, the elements that comprise conventional computer systemization **102** are all interconnected and/or communicating through system bus **104.** Clock 130 typically has a crystal oscillator and provides a base signal. Clock **130** is typically coupled to system bus **104** and various means that will increase or decrease the base operating frequency for other components interconnected in the computer systemization. Clock **130** and various components in a computer systemization drive signals embodying information throughout the system. Such transmission and reception of signals embodying information throughout a computer systemization may be commonly referred to as communications. These communicative signals may further be transmitted, received, and the cause of return and/or reply signal communications beyond the instant computer systemization to communications networks, input devices, other computer systemizations, peripheral devices, and/or the like. Optionally, cryptographic processor **126** may similarly be connected to system bus **104.** It is to be understood that any of the above components may be connected directly to one another, connected to the CPU 103, and/or organized in numerous variations employed as exemplified by various computer systems.

CPU **103** comprises at least one high-speed data processor adequate to execute program modules for executing user and/or system-generated requests. CPU **103** may be a microprocessor such as, but not limited to, the Intel Pentium Processor and/or the like. CPU **103** interacts with memory through signal passing through conductive conduits to execute stored program code according to conventional data processing techniques. Such signal passing facilitates communication within the DQAS controller and beyond through various interfaces.

### Interface Adapters

Interface bus(ses) **107** may accept, connect, and/or communicate to a number of interface adapters, conventionally although not necessarily in the form of adapter cards, such as, but not limited to, input output (I/O) interfaces **108,** storage interfaces **109,** network interfaces **110,** and/or the like. Optionally, cryptographic processor interfaces **127** similarly may be connected to the interface bus. The interface bus provides for the communications of interface adapters with one another as well as with other components of the computer systemization. Interface adapters are adapted for a compatible interface bus. Interface adapters conventionally connect to the interface bus via a slot architecture. Conventional slot architectures may be employed, such as, but not limited to, Accelerated Graphics Port (AGP), Card Bus, (Extended) Industry Standard Architecture ((E)ISA), Micro Channel Architecture (MCA), NuBus, Peripheral Component Interconnect (PCI), Personal Computer Memory Card International Association (PCMCIA), and/or the like.

Storage interfaces **109** may accept, communicate, and/or connect to a number of storage devices such as, but not limited to, storage devices **114,** removable disc devices, and/or the like. Storage interfaces may employ connection protocols such as, but not limited to, (Ultra) Advanced Technology Attachment (Packet Interface) ((Ultra) ATA(PI)), (Enhanced) Integrated Drive Electronics ((E)IDE), Institute of Electrical and Electronics Engineers (IEEE) 1394, fiber channel, Small Computer Systems Interface (SCSI), Universal Serial Bus (USB), and/or the like.

Network interfaces **110** may accept, communicate, and/or connect to communications network **113.** Network interfaces may employ connection protocols such as, but not limited to, direct connect, Ethernet (thick, thin, twisted pair 10/100/1000 Base T, and/or the like), Token Ring, wireless connection such as IEEE 802.11b, and/or the like. Communications network **113** may be any one and/or the combination of a direct interconnection, the Internet, Local Area Network (LAN), Metropolitan Area Network (MAN), Operating Missions as Nodes on the Internet (OMNI), a secured custom connection, Wide Area Network (WAN), wireless network (e.g., employing protocols such as, but not limited to a Wireless Application Protocol (WAP), I-mode, and/or the like), and/or the like. A network interface may be regarded as a specialized form of an input/output interface.

Input Output (I/O) interfaces **108** may accept, communicate, and/or connect to user input devices **111**, peripheral devices **112,** cryptographic processor devices **128,** and/or the like. I/O may employ connection protocols such as, but not limited to, Apple Desktop Bus (ADB); Apple Desktop Connector (ADC), audio based on analog, digital, monaural, RCA, stereo, and/or the like, IEEE 1394, infrared, joystick, keyboard, midi, optical, PC AT, PS/2, parallel based on radio, serial, USB, video interface based on BNC, composite, digital, RCA, S-Video, VGA, and/or the like, wireless, and/or the like. A common output device is a video display, which typically comprises a CRT or LCD based monitor with an interface (e.g., VGA circuitry and cable) that accepts signals from a video interface. The video interface composites information generated by a computer systemization and generates video signals based on the composited information. Typically, the video interface provides the composited video information through a video connection interface that accepts a video display interface (e.g., a VGA connector accepting a VGA display cable).

User input devices **111** may be card readers, dongles, finger print readers, gloves, graphics pads, joysticks, keyboards, mouse (mice), trackballs, trackpads, retina readers, and/or the like.

Peripheral devices **112** may be connected and/or communicate with or to I/O and/or with or to other facilities of the like such as network interfaces, storage interfaces, and/or the like). Peripheral devices may be cameras, dongles (for copy protection, ensuring secure transactions as a digital signature, and/or the like), external processors (for added functionality), goggles, microphones, monitors, network interfaces, printers, scanners, storage devices, visors, and/or the like.

Cryptographic units such as, but not limited to, microcontrollers, processors **126,** interfaces **127,** and/or devices **128** may be attached, and/or communicate with the DRM controller. An MC68HC16 microcontroller, commonly manufactured by Motorola Inc., may be used for and/or within cryptographic units. Equivalent microcontrollers and/or processors may also be used. The MC68HC16 microcontroller utilizes a 16-bit multiply-and-accumulate instruction in the 16 MHz configuration and requires less than one second to perform a 512-bit RSA private key operation. Cryptographic units support the authentication of communications from interacting agents, as well as allowing for anonymous transactions. Cryptographic units may also be configured as part of CPU **103.** Other commercially available specialized cryptographic processors include VLSI Technology's 33 MHz 6868 or Semaphore Communications' 40 MHz Roadrunner 284.

### Memory

Storage device **114** may be any conventional computer system storage. Storage devices may be a fixed hard disk drive, and/or other like devices. However, it is to be understood that a DRM controller and/or a computer systemization may employ various forms of memory **129.** For example, a computer systemization may be configured wherein the functionality of on-chip CPU memory (e.g., registers), RAM, ROM, and any other storage devices are provided by a paper punch tape or paper punch card mechanism. Of course, such an embodiment is not preferred and would result in an extremely slow rate of operation. In a typical configuration, memory **129** will include ROM, RAM, and storage device **114.** Generally, any mechanization and/or embodiment allowing a processor to affect the storage and/or retrieval of information is regarded as memory **129.** Thus, a computer systemization generally requires and makes use of memory. Since memory is a fungible technology and resource, any number of memory embodiments may be employed in lieu of or in concert with one another.

### Module Collection

Storage device **114** may contain a collection of program and/or database modules and/or data such as, but not limited to, operating system module **115** (i.e., operating system), information server module **116** (i.e., information server) user interface module **117** (i.e., user interface), web browser module **118** (i.e., web browser), DRM database **119,** cryptographic server module **120** (i.e., cryptographic server), Information Access Multiple Resolution Server (IAMRS) module **125,** and/or the like (i.e., collectively, a module collection). These modules may be stored and accessed from the storage devices and/or from storage devices accessible through an interface bus. Although non-conventional software modules such as those in the module collection, typically and preferably, are stored in a local storage device **114,** they may also be loaded and/or stored in memory such as peripheral devices, RAM, remote storage facilities through a communications network, ROM, various forms of memory, and/or the like.

### Operating System

Operating system module **115** is executable program code facilitating the operation of a DRM controller. Typically, the operating system facilitates access of I/O, network interfaces, peripheral devices, storage devices, ard/or the like. The operating system preferably is a conventional product such as Apple Macintosh OS X Server, AT&T Plan 9, Microsoft Windows NT Server, Unix, and/or the like operating systems. Preferably, the operating system is highly fault-tolerant, scalable, and secure. An operating system may communicate to and/or with other modules in a module collection, including itself, and/or facilities of the like. Conventionally, the operating system communicates with other program modules, user interfaces, and/or the like. For example, the operating system may contain, communicate, generate, obtain, and/or provide program module, system, user, and/or data communications, requests, and/or responses. The operating system, once executed by CPU **103,** may enable the interaction with communications networks, data, I/O, peripheral devices, program modules, memory, user input devices, and/or the like. Preferably, the operating system provides communications protocols that allow the DRM controller to communicate with other entities through communications network **113.** Various communication protocols may be used by the DRM controller as a subcarrier transport mechanism for interacting with the Handle System, such as, but not limited to, multicast, TCP/IP, UDP, unicast, and/or the like.

### Information Server

Information server module **116** is stored program code that is executed by CPU **103.** The information server may be a conventional Internet information server such as, but not limited to, Microsoft's Internet Information Server and/or the Apache Software Foundation's Apache. Preferably, the information server allows for the execution of program modules through facilities such as C++, Java, JavaScript, ActiveX, Common Gateway Interface (CGI) scripts, Active Server Page (ASP), and/or the like. Preferably the information server supports secure communications protocols such as, but not limited to, File Transfer Protocol (FTP); HyperText Transfer Protocol (HTTP); Secure Hypertext Transfer Protocol (HTTPS), Secure Socket Layer (SSL), and/or the like. Conventionally, an information server provides results in the form of web pages to web browsers, and allows for the manipulated generation of the web pages through interaction with other program modules. After a DNS resolution portion of an HTTP request is resolved to a particular information server, the information server resolves requests for information at specified locations on a DRM controller based on the remainder of the HTTP request. For example, a request such as http://123.124.125.126/myInformation.html might have the IP portion of the request "123.124.125.126" resolved by a DNS server to an information server at that IP address; that information server might in turn further parse the http request for "/myInformation.html" portion of the request and resolve it to a location in memory containing the information "myInformation.html." An information server may communicate to and/or with other modules in a module collection, including itself, and/or facilities of the like. Most frequently, the information server communicates with operating systems, other program modules, user interfaces, web browsers, and/or the like. An information server may contain, communicate, generate, obtain, and/or provide program module, system, user, and/or data communications, requests, and/or responses.

### User Interface

User interface module **117** is stored program code that is executed by CPU **103.** Preferably, the user interface is a conventional graphic user interface as provided by, with, and/or atop operating systems and/or operating environments such as Apple Macintosh OS, e.g., Aqua, Microsoft Windows (NT), Unix X Windows (KDE, Gnome, and/or the like), and/or the like. The user interface may allow for the display, execution, interaction, manipulation, and/or operation of program modules and/or system facilities through textual and/or graphical facilities. The user interface provides a facility through which users may affect, interact, and/or operate a computer system. A user interface may communicate to and/or with other modules in a module collection, including itself, and/or facilities of the like. Most frequently, the user interface communicates with operating systems, other program modules, and/or the like. The user interface may contain, communicate, generate, obtain, and/or provide program module, system, user, and/or data communications, requests, and/or responses.

### Web Browser

Web browser module **118** is stored program code that is executed by CPU **103**. Preferably, the web browser is a conventional hypertext viewing application such as Microsoft Internet Explorer or Netscape Navigator (preferably with 128bit encryption by way of HTTPS, SSL, and/or the like). Some web browsers allow for the execution of program modules through facilities such as Java, JavaScript, ActiveX, and/or the like. In one embodiment, web browsers are Handle-enabled by way of a browser plug-in software such as the Handle System plug-in available from www.cnri.org. In an alternative embodiment Handle support is integrated into the web browser. Web browsers and like information access tools may be integrated into PDAs, cellular telephones, and/or other mobile devices. A web browser may communicate to and/or with other modules in a module collection, including itself, and/or facilities of the like. Most frequently, the web browser communicates with information servers, operating systems, integrated program modules (e.g., plug-ins), and/or the like; e.g., it may contain, communicate, generate, obtain, and/or provide program module, system, user, and/or data communications, requests, and/or responses. Of course, in place of a web browser and information server, a combined application may be developed to perform similar functions of both. The combined application would similarly affect the obtaining and the provision of information to users, user agents, and/or the like from DRM enabled nodes. The combined application may be nugatory on systems employing standard web browsers. Such a combined module could be configured to communicate directly with the DRM without an intermediary information server to further enhance security.

### Digital Object Identifiers (DOIs)

DOIs overcome many of the shortcomings of Internet Protocol (IP) and other location-based addressing schemes. DOIs enable access to information over a communications network by providing a persistent identifier for information that may be regularly relocated. DOIs overcome the limitations of network addressing schemes limited to addressing locations by providing a mechanism to associate identifiers with information through an added level of indirection instead of associating identifiers with locations.

### DRM Database

DRM database module **119** may be embodied in a database that is stored program code that is executed by the CPU **103** and its stored data; the stored program code portion configuring the CPU **103** to process the stored data. Preferably, the database is a conventional, fault tolerant, relational, scalable, secure database such as Oracle or Sybase. Relational databases are an extension of a flat file. Relational databases consist of a series of related tables. The tables are interconnected via a key field. Use of the key field allows the combination of the tables by indexing against the key field, that is, the key fields act as dimensional pivot points for combining information from various tables. Relationships generally identify links maintained between tables by matching primary keys. Primary keys represent fields that uniquely identify the rows of a table in a relational database. More precisely, they uniquely identify rows of a table on the "one" side of a one-to-many relationship.

Alternatively, the DRM database may be implemented using various standard data structures, such as an array, hash, (linked) list, struct, and/or the like. Such data structures may be stored in memory and/or in (structured) files. If the DRM database is implemented as a data structure, the use of the DRM database may be integrated into another module such as the DRM module. Databases may be consolidated and/or distributed in countless variations through standard data processing techniques. Portions of databases, e.g., tables, may be exported and/or imported and thus decentralized and/or integrated. In one non-limiting example embodiment, the DRM database **119** includes tables such as but not limited to a UNI (e.g., Handle, DOI and/or other UNIs) table **119a,** URL table **119b,** metadata table **119c**, multiple resolution table **119d,** policy table **119e,** and/or the like. All the tables may be related by (enhanced) DOI key field entries as they are unique. In an alternative embodiment, these tables have been decentralized into their own databases and their respective database controllers (i.e., individual database controllers for each of the above tables). Of course, employing standard data processing techniques, one may further distribute the databases over several computer systemizations and/or storage devices. Similarly, configurations of the decentralized database controllers may be varied by consolidating and/or distributing the various database modules **119a-e.** DRM database **119** may be configured to keep track of user requests and various transactions tracking via database controllers.

DRM database **119** may communicate to and/or with other modules in a module collection, including itself, and/or facilities of the like. Most frequently, DRM database **119** communicates with a DRM module, other program modules, and/or the like. The database may contain, retain, and provide information regarding other nodes and data.

### Cryptographic Server

Cryptographic server module **120** is stored program code that is executed by the CPU **103,** cryptographic processor **126,** cryptographic processor interface **127,** cryptographic processor device **128,** and/or the like. Preferably, cryptographic processor interfaces will allow for expedition of encryption and/or decryption requests by the cryptographic module. Cryptographic server module **120** may alternatively run on a conventional CPU. Preferably, cryptographic server module **120** allows for the encryption and/or decryption of provided data. Preferably, cryptographic server module **120** allows for both symmetric and asymmetric (e.g., Pretty Good Protection (PGP)) encryption and/or decryption. Preferably, cryptographic server module **120** allows conventional cryptographic techniques such as, but not limited to, digital certificates (e.g., X.509 authentication framework), digital signatures, dual signatures, enveloping, password access protection, public key management, and/or the like. Preferably, cryptographic server module **120** will facilitate numerous (encryption and/or decryption) security protocols such as, but not limited to, checksum, Data Encryption Standard (DES), Elliptical Curve Encryption (ECC), International Data Encryption Algorithm (IDEA), Message Digest 5 (MD5, which is a one way hash function), passwords, RC5 (Rivest Cipher), Rijndael, RSA (which is an Internet encryption and authentication system that uses an algorithm developed in 1977 by Ron Rivest, Adi Shamir, and Leonard Adleman), Secure Hash Algorithm (SHA), Secure Socket Layer (SSL), Secure Hypertext Transfer Protocol (HTTPS), and/or the like. The cryptographic module facilitates the process of "security authorization" whereby access to a resource is inhibited by a security protocol wherein the cryptographic module effects authorized access to the secured resource. A cryptographic module may communicate to and/or with other modules in a module collection, including itself, and/or facilities of the like. Preferably, cryptographic server module 120 supports encryption schemes allowing for the secure transmission of information across a communications network to enable a DRM module to engage in secure transactions if so desired by users. The cryptographic module facilitates the secure accessing of resources on DRM and facilitates the access of secured resources on remote systems, that is, it may act as a client and/or server of secured resources. Most frequently, cryptographic server module 120 communicates with information servers, operating systems, other program modules, and/or the like. Cryptographic server module 120 may contain, communicate, generate, obtain, and/or provide program module, system, user, and/or data communications, requests, and/or responses.

### Information Access Multiple Resolution Server (IAMRS)

IAMRS module **125** is stored program code that is executed by CPU **103.** Generally, the DRM affects accessing, obtaining and the provision of information, and/or the like between nodes on a communications network. The IAMRS has the ability to resolve UNIs to multiple instantiations and services, depending on the type of inbound request. Generally, the IAMRS acts as a lookup facility to create, maintain, and update associations between a given piece of information, its DOI, its current locations, and pointers to associated services. The IAMRS coordinates with the DRM database to identify nodes that may be useful for improving data transfer for requested information, for resolving to various formats of the requesting information, providing an enhanced mechanism to create queries regarding the information, and/or the like. An IAMRS enabling access of information between nodes may be developed by employing standard development tools such as, but not limited to, C++, shell scripts, Java, Javascript, SQL commands, web application server extensions, Apache modules, Perl scripts, binary executables, and/or other mapping tools, and/or the like. In one non-limiting example embodiment, the IAMRS server employs a cryptographic server to encrypt and decrypt communications. The IAMRS may service requests, update association information for UNIs, and much more. A DRM module may communicate to and/or with other modules in a module collection, including itself, and/or facilities of the like. Most frequently, the IAMRS module communicates with a DRM database, operating systems, other program modules, and/or the like. The IAMRS may contain, communicate, generate, obtain, and/or provide program module, system, user, and/or data communications, requests, and/or responses.

### Digital Rights Management Server (DRMS)

DRM module 135 is stored program code that is executed by CPU **103.** DRM module **135** can operate in a stand-alone mode separate from a UNI registration system such as the Information Access Registration System (IARS). DRM module **135** can generate tags that are embedded into information represented by the DOI so that the information may be validated. DRM module 135 coordinates with the DRM database to identify nodes that may be useful for validating UNI and associated information integrity, improving data transfer for requested information, resolving to various formats of the requesting information, providing an enhanced mechanism to create queries regarding the information, and/or the like. A DRM enabling access of information between nodes may be developed by employing standard development tools such as, but not limited to, C++, shell scripts, Java, Javascript, SQL commands, web application server extensions, Apache modules, Perl scripts, binary executables, and/or other mapping tools, and/or the like. In one non-limiting example embodiment, DRM module **135** employs a cryptographic server to encrypt and decrypt communications. DRM module **135** may service requests, redirect requests, update association information for UNIs, and much more. DRM module **135** may also communicate to and/or with other modules in a module collection, including itself, and/or facilities of the like. Most frequently, DRM module **135** communicates with a DRM database, an IAMRS module, and IARS module, operating systems, other program modules, and/or the like. DRM module **135** may contain, communicate, generate, obtain, and/or provide program module, system, user, and/or data communications, requests, and/or responses.

### Distributed DRMS

The functionality of any of the DRM node controller components may be combined, consolidated, and/or distributed in any number of ways to facilitate development and/or deployment. Similarly, the module collection may be combined in any number of ways to facilitate deployment and/or development. To accomplish this, one must simply integrate the components into a common code base or in a facility that can dynamically load the components on demand in an integrated fashion.

The module collection may be consolidated and/or distributed in countless variations through standard data processing and/or development techniques. Multiple instances of any one of the program modules in the program module collection may be instantiated on a single node, and/or across numerous nodes to improve performance through load balancing data processing techniques. Furthermore, single instances may also be distributed across multiple controllers and/or storage devices; e.g., databases.

All program module instances and controllers working in concert may do so through standard data processing communication techniques.

The preferred DRM controller configuration will depend on the context of system deployment. Factors such as, but not limited to, the capacity and/or location of the underlying hardware resources may affect deployment requirements and configuration. Regardless of if the configuration results in more consolidated and/or integrated program modules, results in a more distributed series of program modules, and/or results in some combination between a consolidated and/or distributed configuration, communication of data may be communicated, obtained, and/or provided. Instances of modules (from the module collection) consolidated into a common code base from the program module collection may communicate, obtain, and/or provide data. This may be accomplished through standard data processing techniques such as, but not limited to: data referencing (e.g., pointers), internal messaging, object instance variable communication, shared memory space, variable passing, and/or the like (intra-application communication).

If module collection components are discrete, separate, and/or external to one another, then communicating, obtaining, and/or providing data with and/or to other module components may be accomplished through standard data processing techniques such as, but not limited to, Application Program Interfaces (API) information passage; (distributed) Component Object Model ((D)COM), (Distributed) Object Linking And Embedding ((D)OLE), and/or the like), Common Object Request Broker Architecture (CORBA), process pipes, shared files, and/or the like (inter-application communication). Messages sent between discrete module components for inter-application communication or within memory spaces of a singular module for intra-application communication may be facilitated through the creation and parsing of a grammar. A grammar may be developed by using standard development tools such as lex, yacc, and/or the like, which allow for grammar generation and parsing functionality, which in turn may form the basis of communication messages within and between modules. Again, the preferable embodiment will depend upon the context of system deployment.

Finally, it is to be understood that the logical and/or topological structure of any combination of the module collection and/or the present invention as described in the figures and throughout are not limited to a fixed execution order and/or arrangement, but rather, any disclosed order is exemplary and all functional equivalents, regardless of order, are contemplated by the disclosure. Furthermore, it is to be understood that such structures are not limited to serial execution, but rather, any number of threads, processes, services, servers, and/or the like that may execute asynchronously, simultaneously, synchronously, and/or the like are contemplated by the disclosure.

### IP Addressing

Users access communications networks through addresses. Addresses represent locations. Users traverse locations in a communications network hoping to find information. A common communications addressing scheme employs the IP address. The IP address may be likened to the real world by analogy to a street address. The IP address itself is a sequence of numbers, e.g., 209.54.94.99, and commonly has an associated name, e.g., www.contentdirections.com. A distributed database registry maintains the associated pairs of names and IP addresses and serves to resolve associated names into corresponding IP addresses. This allows people to remember and use names, e.g., www.report.com, instead of being forced to memorize and use a series of numbers, e.g., 209.54.94.99. These distributed databases assisting in the name resolution of IP addresses are commonly referred to as Domain Name Servers (DNS).

It is common for IP addresses to be embodied as Universal Resource Locators (URLs) that append even more navigation information into an address. Users may employ software to access information stored at URLs through the use of HTTP. An example is when a user specifies "http://www.report.com /reports/1999/IncomeStatement.html" in a web browser. Typically this further navigation information, i.e., "/reports/1999/IncomeStatement.html," provides a specific storage location within a computer server. This further navigation location may be likened to a real world address more specific than a street address that includes information such as a company name, department, and room number. This further navigation location is typically not Handled or resolved by DNSs, but instead by an information server at the resolved IP address. For example, an information server at the resolved address of 123.123.123.123 for www.report.com would interpret and return information at a local location of "/reports/1999/IncomeStatementhtml" within the server. An Information Server is a means for facilitating communications between a communication network and the computer server at a particular IP address. Commercial examples of an Information Server include Apache. An Information Server may be likened to a mail department for a business that further routes correspondence to appropriate locations within the business.

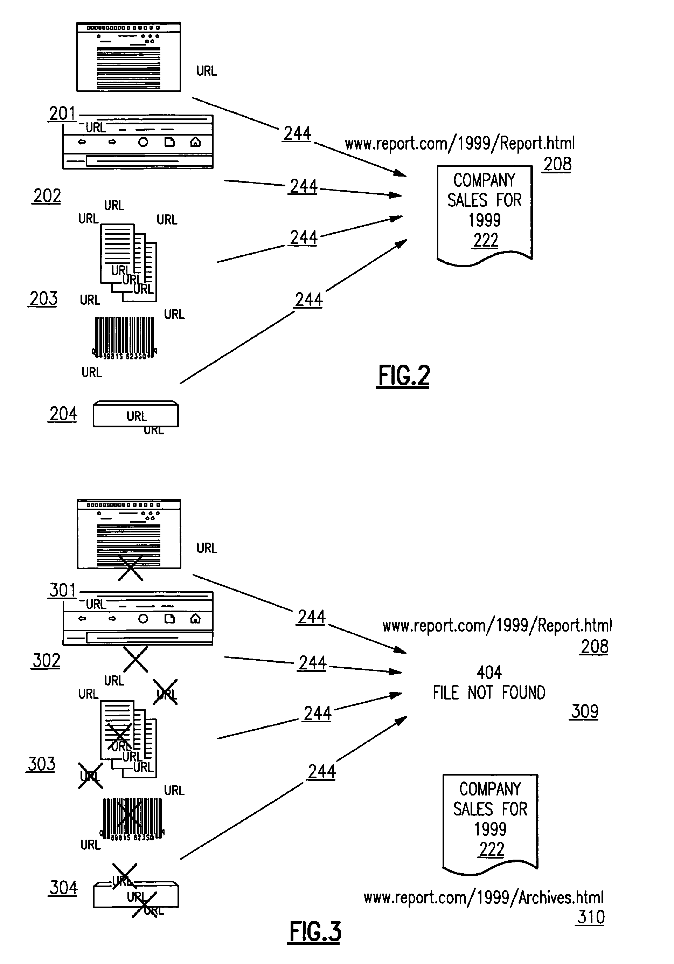

Figures **2** and **3** illustrate that IP addressing mechanisms do not maintain an association with information as it moves across a communications network. Web page links generally employ HTTP, which in turn relies on IP addressing. Thus, URL links simply point to a location on a communication network and are not necessarily associated with any specific information. For example, a URL link referencing www.news.com will have different information associated between the URL and the information made available at the www.news.com location as information at the location is updated daily. In many instances, locations themselves may disappear as companies move information, move their operations, go out of business, etc.

For example, a report entitled "Company Sales for 1999" **222** existing at a location www.report.com/1999/Report.html **208** may be moved to www.report-archives.com/1999/Old-report.html **310,** e.g., because the information was sold from one entity to another, archived, or for many other reasons. The report at www.report.com/1999/Report.html **208** may have had 5 million web pages and URL links referencing the location **244,** and when users attempt to access the information they may well receive a "404 File not found" error **309** because that location no longer exists and/or no longer contains the desired information. The error results because the DNSs were designed to always resolve users' requests to a location and because DNSs are not designed to maintain an association between URLs and a specific instantiation of information.

Figure **2** depicts web page **201,** user entered address **202,** document **203,** and memory device **204** each employing URLs and consequently IP addressing in an attempt to reference a piece of information (the report "Company Sales for 1999" **222).** Then in Figure **2****,** the information **222** is moved from its original location **208** (for example at www.report.com/1999/Report.html) to a new location **310** of Figure **3** (for example www.report.com/1999/Archives.html). In Figure **3****,** this results in breaking **301-304** all the URLs **244** referencing the location and produces the dreaded "404 file not found" error **309** for all users and URLs making reference to the location (www.report.com/1999/Report.html **208).**

### Handle System

Once a piece of information has been assigned a DOI and has been made available, the DOI system needs to be able to resolve what the user of the DOI wants to access. The technology that is used to manage the resolution of DOIs is better known as the "Handle System," and will be described in more detail below. THE DOI HANDBOOK provides a general overview of basic DOIs- In a nutshell, the Handle System includes an open set of protocols, a namespace, and an implementation of the protocols. The protocols enable a distributed computer system to store Handles (such as DOIs) of digital content and resolve those Handles into the information necessary to locate and access the content, to locate and access information related to the content, or to locate and access (i.e., provide an interface to) services associated with the content. This associated information can be changed as needed to reflect the current state of the identified content without changing the DOI, thus allowing the name of the item to persist over changes of location and other state information. Combined with a centrally administered DOI registration agency, the Handle System provides a general-purpose, distributed global naming service for the reliable management of information and services on networks over long periods of time. It is important to note that throughout the present disclosure that "source," "content" and/or "information" made accessible through the DOI system may comprise any identifiable content, source, information, services, transactions, and work of authorship, including articles, books, intangible objects, music albums, people, tangible physical objects, and/or the like further including selected discrete portions and/or combinations thereof. The accessible information may be a CTRL to an application that initiates a service, a transaction, provides a selection mechanism, and/or the like. In one non-limiting example, the DOI may even be associated with information identifying a human being such as a social security number, telephone number, and/or the like. In another non-limiting example, the DOI may be associated with software modules, programming "objects," or any other network-based resource. Furthermore, a DOI can be used to represent most anything including the online representation of physical products (e.g., items currently identified by UPC or bar codes). In such an example, DOIs could resolve to the manufacturer's catalog page describing or offering the product, or even, in a multiple-resolution scenario, offer all services related to the object such as where to go to get the item repaired; where to find replacement parts; what the new or replacement product is; what kinds of pricing or leasing options are available, etc. Other example embodiments implementing DOIs include: representing different modules of software that may operate in distributed fashion across a communications network; telephone numbers for Voice-over-IP technology; gene sequences; medical records and/or other permanent records (DOIs will be especially useful with permanent records protected via encryption and/or other method that might invoke a certificate or decryption key); and/or the like. Another example embodiment for a DOI is to represent the permanent location of a temporary and/or dynamic value such as, but not limited to a current stock quote; current bid and offer prices (for stocks and/or any other kind of auction and/or exchange); a company's current annual report (versus different DOIs for different prior-year annual reports); and/or the like.

Users may access information through Digital Object Identifiers (DOIs). DOIs are associated with (i.e., are names for) information itself. DOIs are instances of "Handles" and operate within the framework of the "Handle system." A DOI allows for access to persistently associated information. The DOI is a string of characters followed by a separator further followed by a string of characters, e.g., 10.1065/abc123def. It should be noted and reemphasized that although the present disclosure may make mention of specific sub-types of UNIs such as "URNs," "DOIs" and "Handles," the present disclosure applies equally well to the more generic types of UNIs, and as such, the present disclosure should be regarded as applying to UNIs in general where any UNI sub-type is mentioned, unless stated otherwise. Furthermore, although the Handle System, DOIs, and their supporting technologies and conventions, which are in use today, are a contemplated forum for the present invention, it should be noted that it is contemplated that the present invention may be applied to other forums based upon current and yet to be conceived conventions and systems.

### DOIs.

Users employing DOIs to access information know they will resolve and access only associated information. In contrast to URLs that reference locations, DOIs are names for information, which can be used to look up that information's location and other attributes, as well as related services. It is envisioned that information may be any information as well as any computer-readable files, including e-books, music files, video files, electronic journals, software, smaller portions and/or combinations of any of the aforementioned content as well. It should be noted that since the electronic content will be made available over a communications network, hereinafter this application refers to such available information as being published on a communications network.

A DOI is a permanent and persistent identifier given to a piece of information made available on a communications network and registered in an electronic form, so that even if the location (i.e., URL), format, ownership, etc. of the content or associated data changes, users will be able to access the associated data. DOIs, or Handles, may be distributed to users in lieu of a URL. A user may access information associated with a particular DOI by selecting or entering the DOI in a Handle-enabled web browser much like a URL hyperlink. Many types of browsers may be enabled by way of browser plug-in software such as the Handle System plug-in available from www.cnri.org. Such an attempt to access DOI associated information triggers an automated process to look up a resource's current location. The current location of the resource is associated with the resource's DOI in a centrally managed directory made available by the Handle System, which in turn directs the user (i.e., the user's web browser) to the resource's current location. This direction is often accomplished by returning a current URL associated with the selected DOI and corresponding information.

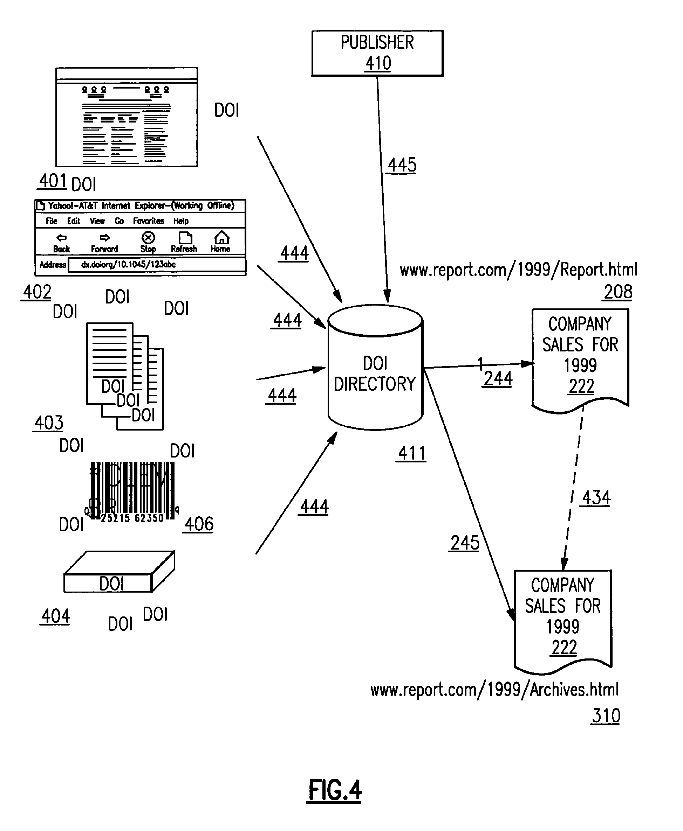

Figure **4** illustrates the access of information through DOIs in contrast to Figures **2** and **3** above. Initially, the information (report of "Company Sales for 1999" **222)** is given a DOI through a registration process. Instead of employing URLs, users reference **444** the information using the DOI through web pages **401,** typed entry in a web browser **402,** documents **403,** devices **404,** barcodes 406, and/or the like. When users engage the DOI links **444,** they are resolved in a centralized DOI directory **411** and the requesting users are given a URL link **244** to the information's **222** initial location (www.report.com/1999/Report.html **208).** Upon the information being moved **434** from its initial location (www.report.com/1999/Report.html **208)** to a new location (www.report.com/1999/Archives.html **310),** the publisher of the information **410** would inform the DOI centralized directory **445** of the new location for the information by sending an updated URL **245** referencing the new location. Thereafter, if users **401-404** attempt to access the information through the DOI links **444,** the DOI directory will properly provide the new location **310** by way of the updated URL **245.**

As noted above, DOIs may not only be used to identify information, but also smaller portions thereof. For example, according to the DOI system, it is possible for a book to have one DOI, while each of its chapters would have other unique DOIs to identify them; furthermore, each figure in the book may have yet other unique DOIs to identify them. In other words, according to the DOI system, it is possible to identify information with variable granularity as desired by the content publishers. Furthermore, it is envisioned that just as Universal Product Codes (commonly expressed as 'bar-codes' on consumer products) allow, for example, a supermarket's cash registers, inventory computers, financial systems, and distributors to automate the supply chain in the physical world, the present disclosure provides a mechanism for employing DOIs to empower all kinds of agents in the world of electronic publishing to automate the sale of digital content (and the licensing of rights to that content) across the Internet in an efficient manner, since each piece of saleable content would have associated with it a globally unique DOI, which could be used as a product identification code in transactions between agents.

### Handle Structure

The Handle System employs a pre-determined set of policies for efficient and user-friendly utilization thereof, some of which of which are listed below. The use of the Handle System for DOI resolution should ideally be free to users, with the costs of operation of the system possibly borne by the publishers. All DOIs are to be registered with a global DOI registry. Registrants are responsible for the maintenance of state data and metadata relating to DOIs that they have registered. The syntax of the DOI follows a standardized syntax. In use, the DOI will be an opaque string (dumb number). DOI registration agencies will manage the assignment of DOIs, their registration and the declaration of the metadata associated with them.

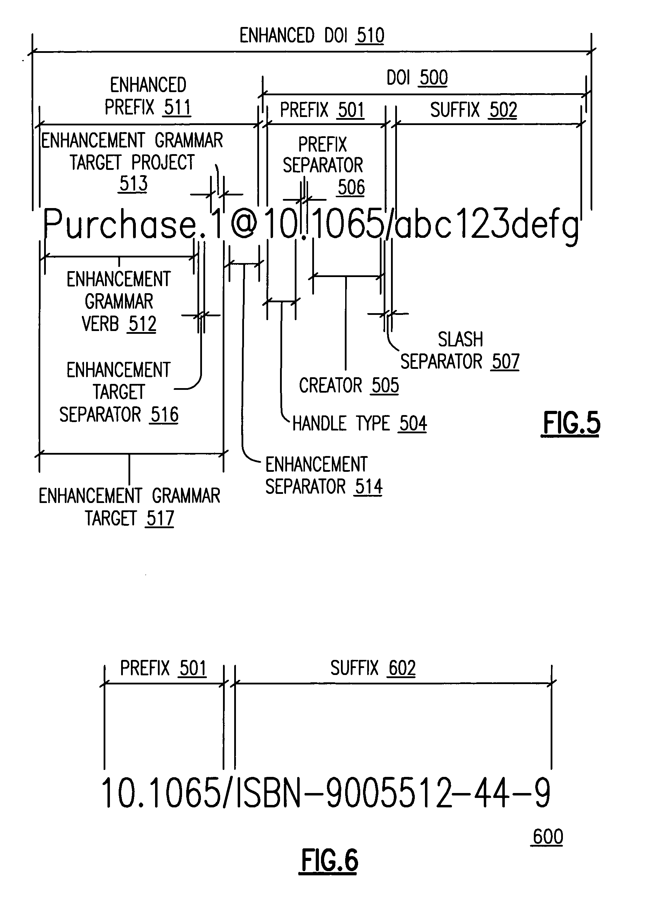

Figure **5** and **6** provide a schematic view of a Handle 600. A Handle **600** has two components, the prefix **501** and the suffix **602.** The prefix **501** and the suffix **502** are separated by a forward slash **507.** The Handle **500** may incorporate any printable characters from almost every major language written or used today. There is no specified limitation on the length of either the prefix **501** or the suffix **502.** As a result, it is envisioned that there are an almost infinite number of Handles available. It is important to ensure that the combination of the prefix **501** and the suffix **502** is unique for supporting the integrity of the Handle System. Thus, the DOI registration agency will award a unique prefix **501** to a publisher. In one embodiment, the registration agency may put the responsibility on these publishers for ensuring that the suffix **502** assigned is unique as well. This may be achieved with a registration tool running on the user's client computer system. In another embodiment, the registration agency will ensure that the suffix **502** is unique by applying various suffix generation algorithms as discussed throughout this disclosure. The Registration Agency and the Handle System administrators will both verify uniqueness of any new Handle before depositing it in the Handle System. The Registration Agency deposits DOI records with the Handle System. The Handle System in turn services DOI resolution requests through a DOI directory.

The prefix **501** itself has two components separated by a prefix separator **506,** which is a period. The first part of the Handle prefix is the Handle type 504. The second part of the Handle prefix is the Handle creator 505. The Handle type **504** identifies what type of Handle system is being used. When the Handle type **504** starts with a "10" the Handle is distinguished as being a DOI as opposed to any other implementation type of the Handle System. The next element of the prefix, separated by a period, is the Handle creator **505,** which is a number (or string of characters) that is assigned to an organization that wishes to register DOIs. Together, these two elements **504** and **505** form the unique publisher prefix portion of the DOI. There is no limitation placed on the number of Handle (or specifically DOI) prefixes that any organization may choose to apply for. As a result, a publishing company, for example, might have a single DOI prefix **501,** or might have a different one for each of its journals, or one for each of its imprints. While generally a prefix **501** may be a simple numeric string, the scope of the Handle System is not limited thereby. Thus, a prefix **501** may also utilize alphabetical characters or any other characters.

The suffix **502** is a unique string of alphanumeric characters, which, in conjunction with a particular prefix **501,** uniquely identifies a piece of information. It should be appreciated that the combination of the prefix **501** for a publisher and the unique suffix **502** provided by the publisher avoids the need for the centralized allocation of DOI numbers. The suffix **502** may be any alphanumeric string that the publisher chooses, so long as it is unique among all suffixes registered in conjunction with the publisher's prefix.

Figure **6** provides a view of another embodiment of the DOI **600,** in which a textbook's ISBN number serves as the suffix **602.** Consequently, where it is convenient, the publisher of the underlying content may choose to select as the suffix **602** any other identification code accorded to the original piece of content.

### Enhanced DOI

Figure **5** further illustrates an enhanced DOI **510** grammar. One non-limiting example embodiment of an enhancement to the DOI grammar is embodied as an enhanced prefix **511.** However, it is fully contemplated that an alternative and/or complimentary enhanced suffix (not illustrated) may be similarly appended to the DOI **500.** The enhanced prefix **511** is comprised of an enhancement grammar target **517** and enhancement separator **514,** which is an "@" symbol, but it is understood any other character may be designated as the enhancement separator. The enhancement grammar target **517** may itself be any string of characters other than the enhancement separator **514.** The enhancement grammar target **517** may be employed for the purpose of having the DOI **500** resolve to multiple versions of a specified information as will be described in greater detail throughout this disclosure. In a further enhanced embodiment, the enhancement grammar target **517** may itself be further comprised of an enhancement grammar verb **512** and enhancement grammar target object **513** separated by an enhancement target separator **516.** e.g., a period. Of course the enhancement target separator **516** may be designated as any character(s). In one example embodiment, the enhancement grammar verb **512** acts as a modifier to select amongst a plurality of multiple resolution targets for a DOI, and the enhancement grammar target object **513** is a value passed to the target object and/or a Handle system resolution server for further action.

### Handle System Metadata

Referring again to Figure **5****,** DOI **500** is merely an identification number that does not necessarily convey any information about its associated information. As a result, it is desirable to supplement the DOI with additional information regarding the addressed information to enable users to perform efficient and user-friendly searches for retrieving the desired content over a communications network. To allow easy identification of information, the present invention provides for the use of metadata, which is descriptive data about the identified information. While metadata may be any data structure that is associated with a DOI, according to one embodiment, the metadata will be comprised of a few basic fields that can accurately and succinctly identify the published information. According to this embodiment, the metadata will comprise an identifier associated with the entity from a legacy identifier scheme such as the International Standard Book Number (ISBN) for a book, title of the published content, type of content being published (such as book, music, video, etc.), whether the content is original or a derivation, a primary author of the content, the role of the primary author in creating the content, the name of the publisher, and/or the like. As different types of content may require different metadata for describing it, one aspect of the DOI system envisions the use of different metadata for different types of content.

According to one example embodiment, metadata will be made available to any user of the DOI system to enable them to find the basic description of the entity that any particular DOI identifies. This basic description will allow the user to understand some basic things about the entity that published the content or the content itself.

As a result, to find out what information the DOI identifies, it is desirable to resolve it, and then review associated metadata because the DOI links the metadata with the content it identifies and with other metadata about the same or related content. In one embodiment, the metadata allows for the recognition of the information identified by DOI 500 as well as its unambiguous specification. The metadata will also allow for the interaction between the information and other contents in the network (and with metadata about those entities).

### DOI Information Access

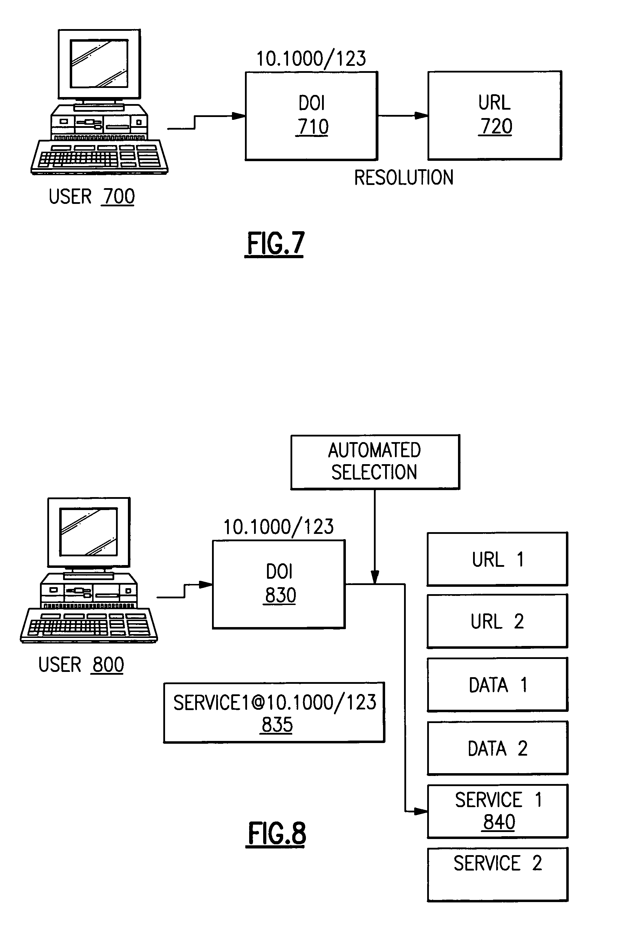

Figures **7** and **8** provide an overview of the resolution mechanism for allowing users to access the desired information by merely providing the DOI to the DOI Handle system. Resolution in the present context includes the submitting of an identifier to a network service and receiving in return one or more pieces of current information related to the identifier. According to one embodiment of the DOI system, shown in Figure **7****,** user **700** is a general-purpose workstation running a web browser application to point to content identified by DOI **710.** DOI **710** has only one URL associated with it, and must resolve to that URL. As a result, when user **700** makes a request for underlying content identified by a particular DOI **710,** the user is directed to URL **720,** where the desired content lies.

As such, this mechanism allows the location of the information to be changed while maintaining the name of the entity as an actionable identifier. If the publisher changes the location of the content, the publisher must merely update the DOI's entry in the Handle System database to ensure that the existing DOI **710** points to the new location of the content. As a result, while the location of the content has changed, the DOI remains the same and users are able to access the content from its new location by using the existing DOI.

Figure **8** provides an overview of a DOI system where users may use a DOI for resolving a request for one piece of content, out of a plurality of available identical copies of the same piece of content that are identified by the same DOI, as well as the location of data about the piece of content, and services associated with the content (such as purchasing the content). Thus, user **800,** a general-purpose computer, uses a web browser application to provide the necessary DOI **830.** DOI **830** may be structured to describe the type of service desired **835.** As a result, the DOI system is able to resolve the particular piece of content **840** that the user desires to access.

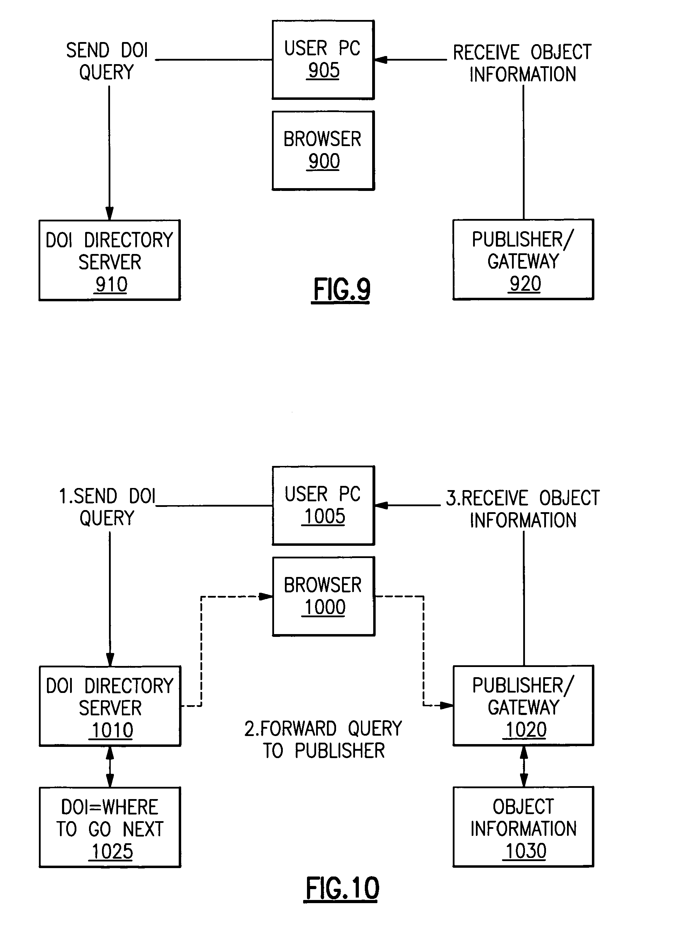

Figure **9** provides an overview of the sequence of actions that a user performs to access information, in accordance with the present invention. Initially, the user launches browser client **900** on computing device **905,** such as personal computer, personal digital assistant (PDA), and/or the like. The user engages the browser **900** to make a DOI query. The DOI query is forwarded to the DOI Directory Server **910** over a communications network. The system of the DOI Directory Server **910** examines the DOI against the entries stored therein and forwards the appropriate URL to the browser **900** on the user's computer **900,** in a manner that is invisible to the user. As a result, the browser is pointed to the desired content on a server with the appropriate publisher information **920.** Finally, upon receipt of the request from the user's browser, the publisher **920** forwards the desired information to the user, which may be accessed in the browser client **900.**

Figure **10** provides a more complete view of the sequence of actions that a user performs to access content information, as shown in Figure 9. As noted above, the user launches the browser client **1000** on a computing device **1005.** The user engages the browser **1000** to make a DOI query. The DOI query is forwarded to the DOI Directory Server **1010** over the communications network. The system of the DOI Directory Server **1010** examines the DOI against the entries stored therein. As a result of the checking of the DOI against the entries stored in the DOI Directory Server **1010,** DOI Directory Server **1010** determines where the DOI must lead the user **1025.** The appropriate URL for the content is automatically forwarded to the user's browser **1000,** without any intermediate intervention or action by the user. As a result, browser **1000** is pointed to the appropriate publisher **1020** whose server is addressed by the underlying URL. The URL is used by the publisher's server **1020** to determine the exact location for content desired by the user, and the publisher's server **1020** forwards the appropriate content **1030** to the user.

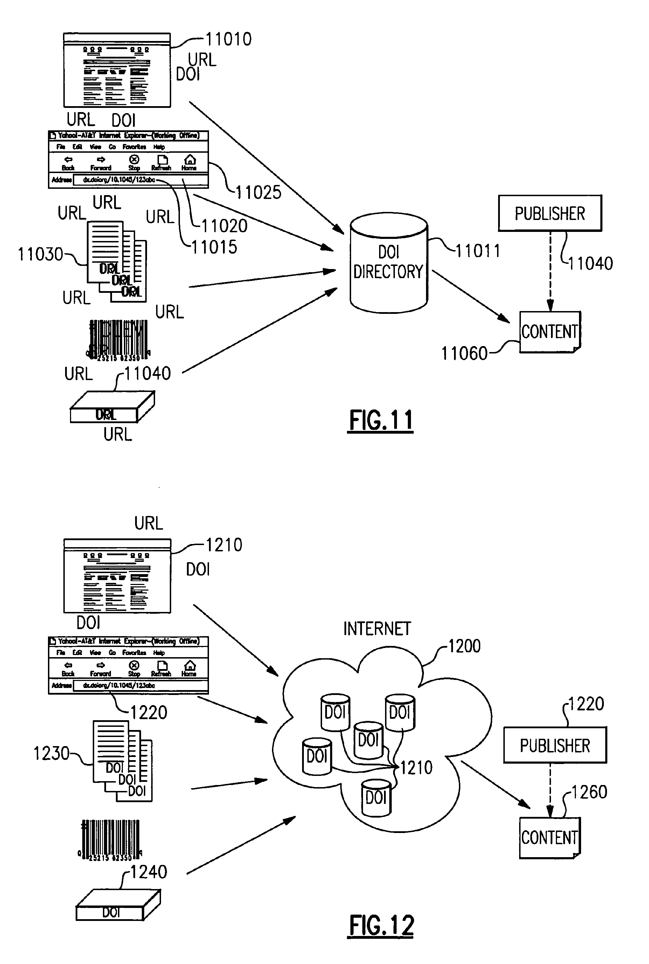

Figure **11** provides an overview of some of the exemplary mechanisms for accessing information over a communications network by resolving a DOI to obtain the URL where the desired content is located, in accordance with the present invention. According to one embodiment, the user may directly provide the DOI and the DOI system retrieves and forwards the appropriate content to the user by simply linking to the appropriate URL. According to another embodiment, the user may provide information related to some of the fields included in the metadata, whereupon a DOI lookup service identifies the appropriate DOI, which in turn may be resolved to the desired content's location. As shown in Figure **11****,** according to one embodiment, a search engine **11010** may be provided to a user. In one embodiment, the search engine is offered and disposed in communication with the registration agency's DOI and metadata database. In an alternative embodiment, a search engine such as www.google.com may be adapted to submit queries to the registration agency's databases. The user searches for the appropriate DOI by providing some identifying information to the search engine **11010.** The search engine **11010** uses the identifying information provided and searches a database of metadata to retrieve the DOI associated with the provided metadata information. Thus, the user conducting the search may be presented with returned DOIs from the metadata database and/or URLs resolved from said returned DOIs. The retrieved DOI is sent to the DOI directory **11011**, which resolves the URL wherein the desired content is located by a publisher **11040**. Finally, the user's browser is pointed to the appropriate content **11060.**

According to another embodiment, the user may provide DOI **11015** in address window **11020** of browser **11025.** If the user's web browser is not capable of natively processing DOIs, then DOI **11015** may contain the address of a proxy server for DOI directory **11011,** which in Figure **11** is "dx.doi.org." As a result, the browser is pointed to the DOI directory **11011** located at dx.doi.org, which resolves the URL at which the desired content is located by a publisher **11040** and points the user's browser thereto.

According to another embodiment, the DOI may be embedded in a document or some form of information **11030,** whereupon clicking the DOI directs the user to the appropriate DOI directory **11011,** which determines the URL at which the desired content is located and points the user's browser thereto.

According to another embodiment, the DOI may be provided on memory **11040,** such as a CD-ROM or a floppy disk, whereupon the memory may automatically, or upon being activated, direct the user to the appropriate DOI directory **11011,** which resolves the URL at which the desired content is located and points the user's browser thereto.

According to yet another embodiment, the DOI may be provided in printed form to a user, who enters the DOI manually as above or by way of optical and/or mechanical peripheral input device.

Figure **12** provides an overview of another embodiment of the exemplary mechanisms for retrieving information over a communications network, whereupon the DOI system resolves a DOI to obtain the URL where the desired information is located. According to this embodiment, a plurality of DOI directories **1210** exist as a distributed DOI directory and form a Handle System **1200**. In one embodiment, the distributed DOI directory acts and responds to requests as if it were a singular directory **11011**. Otherwise resolutions take place similarly as in Figure **11**.

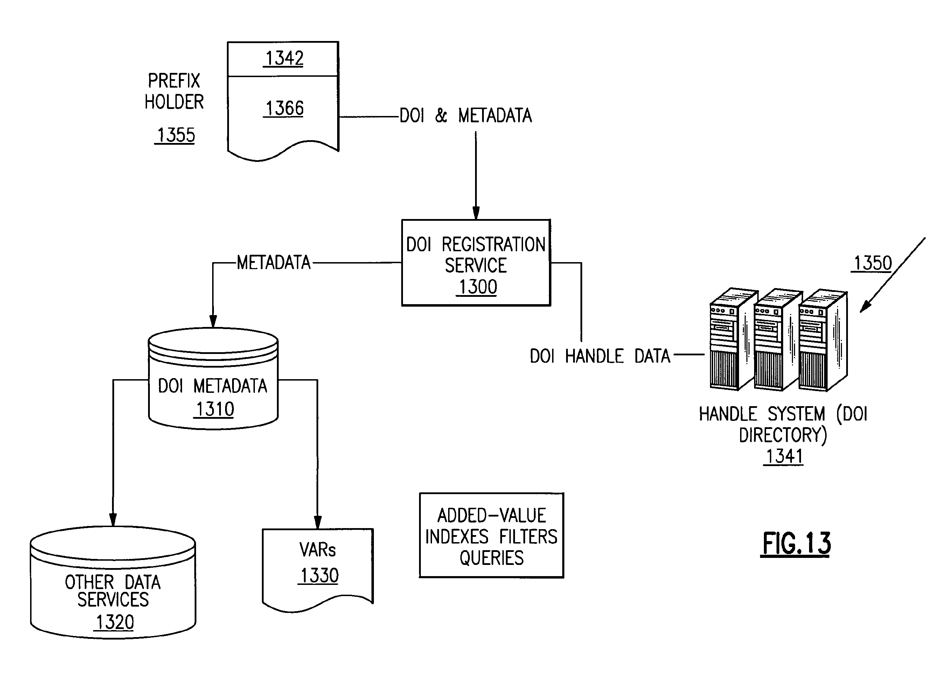

Figure 13 provides an overview of an exemplary DOI system, in accordance with the present invention, wherein the publishers, the DOI registration service and the Handle System collaborate together to create an efficient DOI system. The prefix holder **1355** may submit information to a DOI registration service **1300** comprising DOI **1342** and associated metadata **1366.** The prefix holder who has already been assigned a unique prefix **501,** requests that a suffix **502** be assigned to a piece of content **1366.** The registration service **1300** is responsible for parsing and/or reformatting the user's streams of submitted information **1342, 1366** for subsequent deposit in a Handle system **1350** and/or metadata database **1310.** As noted above, the scope of the content that can be addressed using a DOI is unlimited. As a result, the content **1366** may comprise any information and work of authorship, including articles, books, music albums, or selected discrete portions thereof. In addition to providing DOI **500,** the publisher **1342** collects metadata for the content **1366.** The metadata may comprise the content's DOI **500,** a DOI genre, an identifier, title, type, origination, primary agent, agent's role, and/or the like. It may also comprise listings of associated services having to do with the identified piece of content offered by various parties, such as the locations of web pages where a piece of content may be purchased online.

Once the publisher **1342** has assigned the suffix **502** to the content **1366** and collected the necessary metadata, the DOI **500** and the metadata are transmitted to the DOI registration service **1300.** The DOI registration service **1300** maintains a database of DOIs **500,** metadata of all the registered content **1366,** as well as the URL at which the content **1366** is located. According to the present invention, the DOI registration service **1300** forwards the metadata to a metadata database **1310, 119c** of Figure **1****,** which may or may not be integrally maintained by the DOI registration service **1300.**

The DOI registration service **1300** may use the collected metadata for providing it to other data services **1320** or for providing value-added resources **1330** to the users. In addition, the DOI registration service **1300** sends the appropriate DOI Handle data to the Handle System **1350,** which may comprise a plurality of DOI Directory Servers **1341.**

### Digital Rights Management

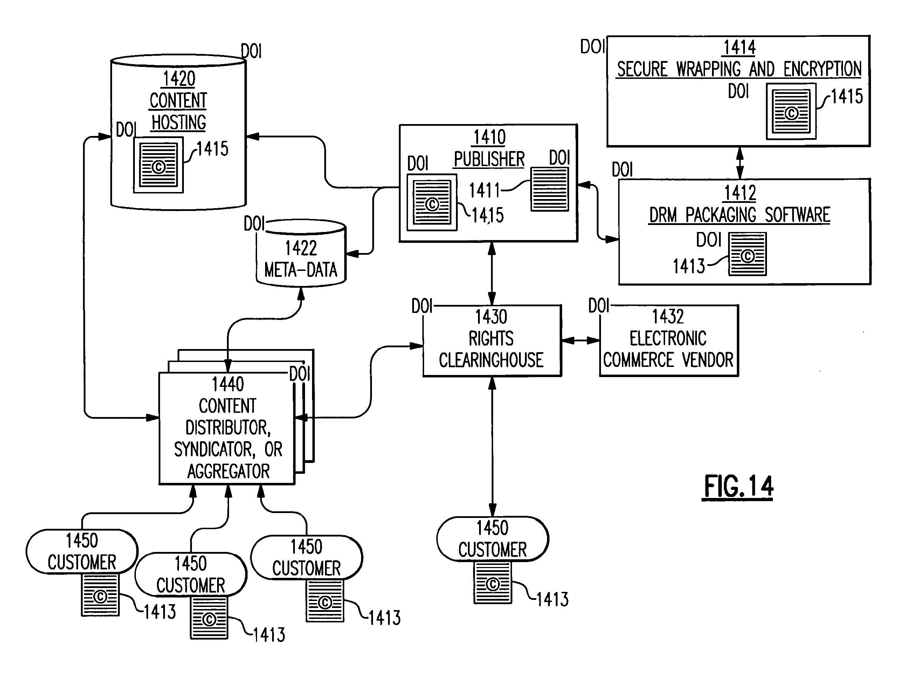

Figure **14** is a functional block diagram that illustrates the interaction between the parties involved in a traditional digital rights management (DRM) scenario. A traditional DRM scenario begins with publisher **1410** creating or acquiring a digital work that requires protection. Work **1411** is one example of the digital asset. Publisher **1410** sends work **1411** to DRM packaging software **1412** and specifies the rights to associate with work **1411.** These rights restrict the actions that customer **1450** can perform and include, but are not limited to, allowing the customer to read the work, copy the work, forward the work to another customer, and print the work. These rights may also be time-based (e.g. allowing any of the aforementioned actions for a specified period of time such as for two weeks, or from a certain date to another date). These rights may also be granted for a specified number of events (e.g., allowing the customer to access the content for reading 20 times only, or allowing the customer to print a pre-specified number of copies, or allowing the customer to forward the content to a certain number of recipients, or allowing the customer to forward to any number of recipients but allowing access only to the first 20 recipients by requiring all recipients to secure access rights from a central server which has a counter granting access only to the first 20 requestors). These rights may also be associated with various sales promotions, product or service bundlings, or discounts and the like. There are countless variations, combinations and permutations of these rights which may be assigned by Publisher **1410.** Publisher **1410** can specify these rights independently of one another. After the rights are specified, DRM packaging software **1412** may forward protected work **1413** to secure wrapping and encryption **1414** to encrypt the contents of work **1413** and place work in a secure container. The wrapped and secure work is returned to the publisher as secure work **1415.** It is to be understood that publisher **1410,** DRM packaging software **1412,** and secure wrapping and encryption **1414** can perform the functions described above on either a single computer or a distributed network of computers. Furthermore, it is to be understood that the functions performed by DRM packaging software **1412** and secure wrapping and encryption **1414** can be performed on the behalf of publisher **1410** by an entity other than publisher **1410.** Furthermore, it is to be understood that the functions described above may be performed by different software modules or by software modules which combine these various functions together or with other related or unrelated functions.

Publisher **1410** stores secure work **1415** on content hosting **1420** database. In addition, data that describes secure work **1415** is stored on metadata database **1422.** It is to be understood that publisher **1410,** content hosting **1420,** and metadata database **1422** can perform the functions described above on either a single computer or a distributed network of computers. Furthermore, it is to be understood that the functions performed by DRM content hosting **1420** and metadata **1422** can be performed by an entity other than publisher **1410.**

Customer **1450** obtains a copy of secure work **1415** by a means of digital distribution. Customer **1450** may visit the web site for publisher **1410** to download a copy of secure work **1415.** Alternatively, customer **1450** may browse an index or library catalog and happen across a link to secure work **1415** at either the web site for publisher **1410** or a mirror web site hosted by an entity other than publisher **1410.** Or, customer **1450** may receive secure work **1415** directly from another customer, that is, through "superdistribution". The digital asset is useless to customer **1450** because secure work **1415** is securely wrapped and encrypted by publisher **1410,** as described above.

When customer **1450** attempts to access secure work **1415,** a connection will be established to rights clearinghouse **1430.** Rights clearinghouse **1430** checks the user identification associated with secure work **1415,** determines the rights that publisher **1410** associated with secure work **1415,** and takes payment for using secure work **1415** from customer **1450.** Rights clearinghouse **1430** has a relationship established with electronic commerce vendor **1432** to validate credit card and debit card transactions, send a bill to customer **1450,** and report the transactions to publisher **1410.** Upon receipt of an affirmative response from electronic commerce vendor **1432,** rights clearinghouse **1430** issues a key or a permit for secure work **1415** to customer **1450.** Customer **1450** uses the key or permit to gain access to protected work **1413.** Rights clearinghouse **1430** updates a log or a database to report to publisher **1410** the aggregate sales numbers and the individual customer information. It is to be understood that publisher **1410,** rights clearinghouse **1430,** and electronic commerce vendor **1432** can perform the functions described above on either a single computer or a distributed network of computers. Furthermore, it is to be understood that the functions performed by rights clearinghouse **1430** and electronic commerce vendor **1432** can be performed by an entity other than publisher **1410.**

In another embodiment, customer **1450** can access secure work **1415** through content distributor, syndicator, or aggregator **1440.** The content distributor, syndicator, or aggregator **1440** will allow customer **1450** to browse metadata database **1422.** Metadata database **1422** includes, but is not limited to, a listing service, catalog service, or sales directory service. When customer **1450** demonstrates an interest in a work such as secure work **1415,** the content distributor, syndicator, or aggregator **1440** sends a request to content hosting **1420** and retrieves secure work **1415.** Content distributor, syndicator, or aggregator **1440** is also coupled to rights clearinghouse **1430** to coordinate, as described above, the payment by customer **1450** for the rights associated with secure work **1415.** It is to be understood that publisher **1410** and content distributor, syndicator, or aggregator **1440** can perform the functions described above on either a single computer or a distributed network of computers. Furthermore, it is to be understood that the functions performed by content distributor, syndicator, or aggregator **1440** can be performed by an entity other than publisher **1410.**

The scenario illustrated in Figure **14** is a fragile system. Typically, each instance of the original digital work **1411** (i.e., protected work **1413** and secure work **1415)** is a separate resource. In addition, there may be several entities (i.e., publisher **1410,** DRM packaging software **1412,** secure wrapping and encryption **1414,** and content hosting **1420** and meta-data **1422** database) involved in the control and distribution of each instance of the original digital work **1411.** A link that customer **1450** finds while searching the Internet or browsing a catalog or peer-to-peer server is likely to be out-of-date. Similarly, content distributor, syndicator, or aggregator **1440** cannot guarantee the quality of a link or reference to secure work **1415** or protected work **1413.** Thus, there is a need for an apparatus, method, and system that will eliminate the fragility of the links and increase the durability of the system.

The scenario illustrated in Figure **14** is a fragile system for another reason as well, besides the absence of persistent links between the systems involved. This reason is the absence of a unique, unambiguous, universally-recognized identifier for the content itself. Typically, each instance of the original digital work **1411** (i.e., protected work **1413** and secure work **1415**) is a separate resource. In addition, there may be several entities (i.e., publisher **1410,** DRM packaging software **1412,** secure wrapping and encryption **1414,** and content hosting **1420** and meta-data **1422** database) involved in the control and distribution of each instance of the original digital work **1411.** If these entities cannot rely on a unique identifier for the content, they cannot easily or reliably interoperate with each other - i.e., communicate with each other via a reliable method of referencing to the content. This is similar to the way that Universal Product Codes (a.k.a. bar codes) permit interoperability between many entities that must reference physical objects reliably, such as point-of-sale (POS) systems communicating with inventory control systems, inventory control systems communicating with "just-in-time" replenishment-ordering systems, replenishment-ordering systems communicating from a store to a distributor or manufacturer's ordering systems. But there is no corresponding identifier for objects of digital content except the DOI, and therefore there is a need for an apparatus, method, and system that will increase the durability of the system by eliminating the fragilities represented by the absence of an identifier to permit cross-system communication and interoperability.

Figure **14** also illustrates the integration of digital object identifiers (DOIs) into the traditional digital rights management scenario. At the time of publication of a work, publisher **1410** issues a unique DOI for that work, which is then registered with a DOI registration agency **1550.** The DOI is then used to unambiguously refer to the identified work in all manner of transactions throughout the rest of the system. For example, the content hosting provider **1420** would store and retrieve works based on their DOIs. In this way, when publisher **1410** wanted to update file **1415** hosted by the content hosting provider, it could transmit the updated file with instructions to replace the older version of the work identified by the same DOI.

In yet another example, rights clearinghouse **1430** that sold access permissions to customer **1450** uses the DOI to report sales figures for all of a publisher's various works back to the publisher on an ongoing basis. Currently, many rights clearinghouses report back sales figures to publishers in a non-automatable, manual fashion, using bibliographic information such as, for example, title, author, and year of publication to attempt to unambiguously identify the works that have been sold. This requires publisher **1410** to manually transfer the sales information to their own systems, and is not guaranteed to make necessary distinctions between versions of the same work which are sold separately but share much of the same bibliographic information. Using each work's unique DOI to refer to that work assures all parties that they are referring to the same work, and allows for automated interoperability between disparate computer systems, such as the sales system of a rights clearinghouse and the financial systems of a publisher.

The same benefits of reliable, unambiguous identification and automated interoperability apply to all other communications channels in the DRM system illustrated in Figure **14****.** For example, when customer **1450** purchases a key to access protected work **1413,** they can be assured that the key is correct and not one for another work by the same author, associated with a similar title, or in a different format or language. In yet another example, content distributor, syndicator or aggregator **1440** who wishes to present a number of available works by a single author to a community of customers **1450** can communicate with metadata database **1422** to look-up the DOIs of the relevant works, can transmit rights clearance requests using the DOI for each of the identified works to the rights clearinghouse **1430,** and can then download the works as needed from the content hosting service **1420** using the DOIs to request the appropriate works.

### Multiple Resolution

Referring again to Figure **14****,** customer **1450** causes a request for DOI resolution to be made to the DOI system either by directly entering a DOI or by relying upon content distributor, syndicator, or aggregator **1440** to enter the DOI, or by using end-user DRM software that can make a DOI request. The DOI request is sent to a DOI server and resolved to a piece of data, often a pointer in the form of a URL, associated with secure work **1411.** A DOI can resolve to one of many pieces of data, depending on the type of request made to the DOI system. Customer **1450** or content distributor, syndicator, or aggregator **1440** may choose to integrate the type of resolution request into the DOI request in the form of an enhanced DOI. Generally, the enhanced DOI will take the form "XXXX@10:1000/abc123defg, where XXXX is the argument or list of arguments to the DOI system. Publisher **1410** creates and registers types for the argument, XXXX, with the DOI server. For instance, a securely wrapped work may include, in the wrapper, an enhanced DOI, such as GET.RIGHTS@10.1000/abc123defg, that resolves to the location of the rights clearinghouse that can accept payment and unlock the content for authorized users. If the location of the rights clearinghouse moves, or if the publisher contracts with a different rights clearinghouse, the Handle System directory entry can be easily updated by publisher **1410,** and all existing DOI-based links will continue to work, even though they were created before the changes were instituted.

In yet another example, a customer who has received a piece of secured content who wishes to access an excerpt of the work before deciding whether to purchase the work, can make a request to the DOI system for the location of such an excerpt. The DOI system could respond with either the URL of a page containing an excerpt, or could point the user's DRM software to an access key that unlocks a small part of the secure file for a limited time and for no charge.

### Digital Watermarking

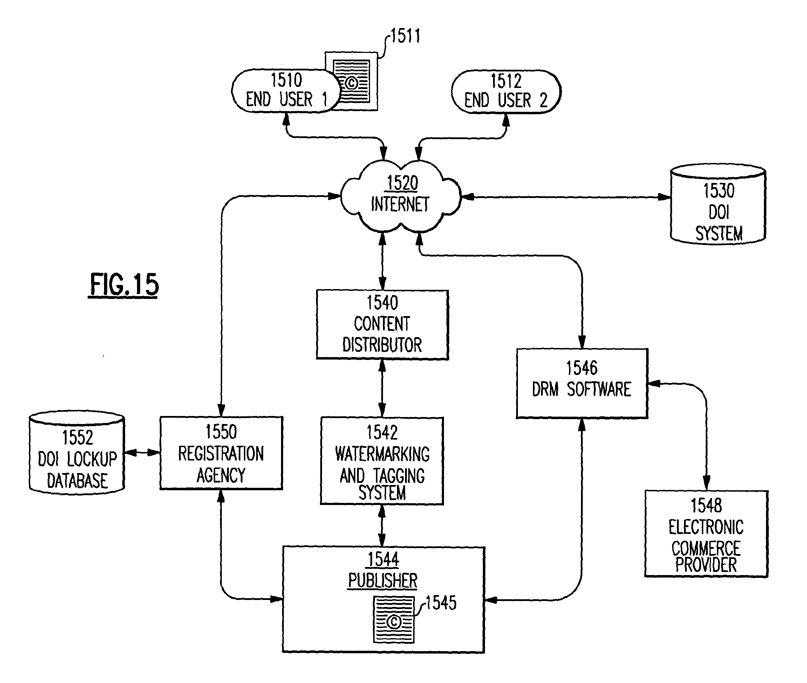

Figure **15** illustrates the integration of a watermark into the digital rights management scenario shown in Figure **14****.** Publisher **1544** must register work **1545** with DOI registration agency **1550** to receive a unique DOI to assign to the work. Registration agency **1550** stores metadata that describes work **1545** in DOI lookup database **1552.** In addition, a number of services are registered, associated with the unique DOI, and registered by registration agency **1550** in DOI system **1530.** Figure **15** depicts publisher **1544** as coupled to registration agency **1550** by a direct communications connection. It is to be understood that communications between publisher **1544,** registration agency **1550,** DOI lookup database **1552,** and DOI system 1530 can take place over a network such as Internet **1520.**

Once work **1545** is registered with DOI registration agency **1550,** publisher **1544** forwards work **1545** to watermarking and tagging system **1542.** Watermarking and tagging system **1542** embeds a watermark in a digital work by adding extra information to the digital work in such a manner that the extra information does not degrade the quality of the digital work. Numerous acceptable methods exist in the prior art for applying a watermark to a digital image, movie, or audio file, however, only one watermarking method will be detailed in this disclosure. The novel aspect disclosed herein pertains to the use of the DOI as part of the information included in the digital watermark. Since a DOI is resolvable or actionable, anyone who can extract the watermark can use the DOI to initiate contact with the current holder of the property rights associated with work **1545** and can access the most up-to-date locations for various registered services associated with the work. For example, if a digital image is watermarked with the DOI for the digital image, a user who encounters the digital image on a website can extract the DOI and automatically place a request for the rights to reuse the digital image. The user may also retrieve the most up-to-date information about the photographer and the subject of the photograph, and could be offered a high-resolution version of the same photo for use in their print publications. It is to be understood that publisher **1544** and watermarking and tagging system **1542** can perform the functions described above on either a single computer or a distributed network of computers. Furthermore, it is to be understood that the functions performed by watermarking and tagging system **1542** can be performed by an entity other than publisher **1544.**

One prior art method of watermarking an image file is least significant bit watermarking. A standard image file represents an image as a grid of picture elements or pixels, wherein each pixel corresponds to a region of the image. A high-quality image may require 90,000 pixels to represent each square inch of the image. A number is assigned to each pixel that indicates the color and brightness that best describes region of the image that corresponds to the pixel. An 8-bit grayscale image, for example, assigns each pixel a number between 0 and 255 to indicate the brightness of the region of the image; where the value 0 represents black, the value 255 represents white, and the value 127 represents a medium shade of gray. Since the range 0 to 255 can be represented with 8 bits in base 2 or binary, each pixel value requires 8 bits of storage. For example, a pixel value of decimal 155 after conversion to base 2 notation is "10011011" (i.e., 100110 11 (base 2) = 1*128 + 0*64 + 0*32 + 1*16 + 1*8 + 0*4 + 1*2 + 1*1 = 155 (base 10 or decimal). Thus, the image can be represented by a long series of binary digits or bits that can only be either 0 or 1.

In the example shown above, since the rightmost digit of "10011011" is multiplied by the lowest power of the base, the value of the rightmost digit has the least impact on the value of the number. Thus, the rightmost digit is called the "least significant digit" or for binary numbers the "least significant bit". Altering the least significant bit of every pixel in an image file of sufficient depth (i.e., with a large enough range of possible values) will, therefore, rarely result in visible degradation of the image.

Least significant bit watermarking encodes a message as a string of bits into an image by replacing the least significant bit of each pixel value in a selected range of pixel values. This method of digital watermarking is not typically detectable to the human eye because the alteration at most change the value of each pixel by 1 unit. Even for a low-quality 8-bit grayscale image, a 1 unit change in shading is not generally detectable to the human eye. If a viewer of the image expects a watermark and knows how to analyze the image, the user can extract the encoded message.

Least significant bit watermarking is known to be a "fragile watermark" because it can easily be removed from the file either intentionally (e.g. by replacing the least significant bits of every pixel with zeros), or unintentionally (e.g. by compressing the image using a lossy compressor, or by cropping, or zooming the image). There are other publicly available, more robust methods for encoding a watermark in a digital file, which are well-known to those trained in the art.

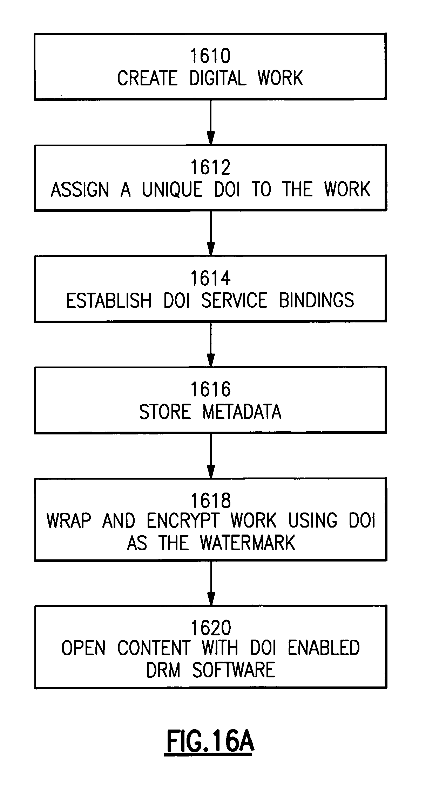

Figures **16A** is a flow diagram of an embodiment of the watermarking process shown in Figure **15** that results in a user opening a protected digital work. The process shown in Figure **16A** begins at step **1610** by a publisher creating a digital work. Once the work is created, the publisher contacts a registration authority to assign a unique DOI to the work at step **1612.** At step **1614,** the publisher establishes and registers DOI service bindings to the work. Finally, the publisher registers and stores metadata with the registration agency at step **1616.** The metadata includes, but is not limited to, bibliographic data, sensory fingerprint data, and checksum data. At step **1618,** the publisher uses software to wrap and encrypt the work using the DOI as the watermark. At step **1620,** a user encounters the wrapped and encrypted work and opens the content using DRM software that can extract the DOI-based watermark and gain access to the content.

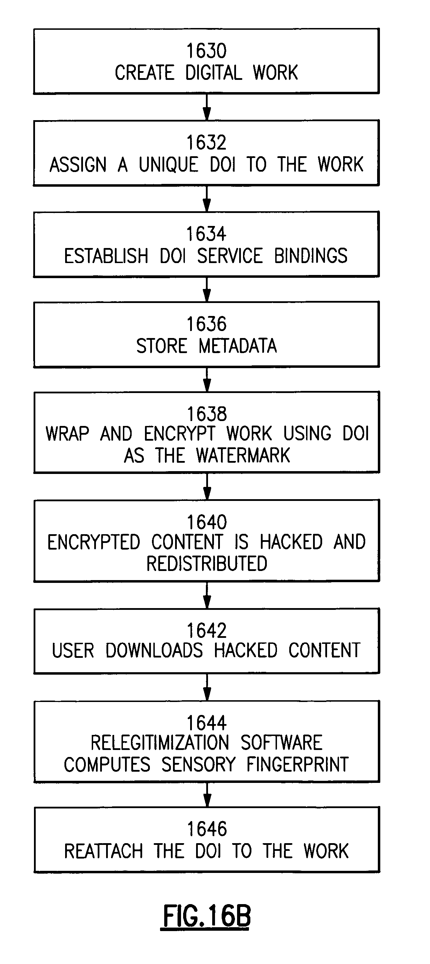

Figure **16B** is a flow diagram of an embodiment of the watermarking process shown in Figure **15** that results in a user accessing a hacked digital work. The process shown in Figure **16B** begins at step **1630** by a publisher creating a digital work. Once the work is created, the publisher contacts a registration authority to assign a unique DOI to the work at step **1632.** At step **1634,** the publisher establishes and registers DOI service bindings to the work. Finally, the publisher registers and stores metadata with the registration agency at step **1636.** The metadata includes, but is not limited to, bibliographic data, sensory fingerprint data, and checksum data. At step **1638,** the publisher uses software to wrap and encrypt the work using the DOI as the watermark. At step **1640,** a user encounters the wrapped and encrypted work after the work has been hacked or corrupted and subsequently redistributed. Thus, the DOI watermark is invalid or not retrievable. At step **1644,** relegitimization software analyzes the hacked or corrupted work and computes a sensory fingerprint for the work. At step **1646,** the relegitimization software contacts the DOI system to look-up the works DOI based on the metadata, allowing the user to open the content using DRM software that can use the DOI to gain access to the content and to other services associated with the work.

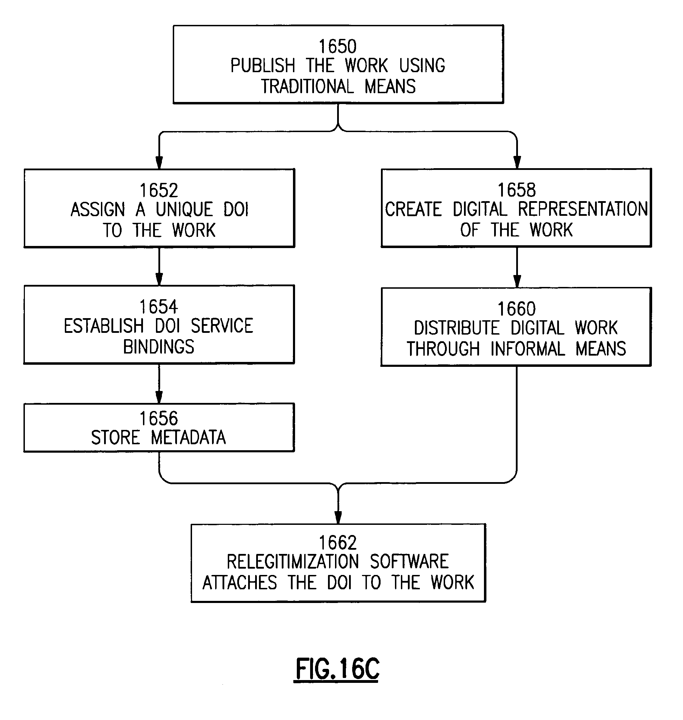

Figure **16C** is a flow diagram of an embodiment of the watermarking process shown in Figure **15** that results in a user accessing an informally distributed digital work. The process shown in Figure **16C** begins at step **1650** by a publisher publishing a work using a traditional means such as distribution of a print version of a journal that contains the work. Following traditional publication of the work, the flow splits into two paths. One path begins at step **1658** when someone creates a digital representation of the work and, at step **1660,** distributes the digital work through some informal means. Informal distribution of the work, for example, includes posting a portable data format (PDF) version of the work on a public web site. The other path begins at step **1652** when the publisher contacts a registration authority to assign a unique DOI to the work. At step **1654,** the publisher establishes and registers DOI service bindings to the work. Finally, the publisher registers and stores metadata with the registration agency at step **1656.** Step **1662** unites the split flow by using the relegitimization software to attach the unique DOI from step **1652** with the informally distributed version of the work from step **1660.** A user can now open the informally distributed PDF version of the work using DRM software that can use the DOI to gain access to the content and to other services associated with the work.

### Validation

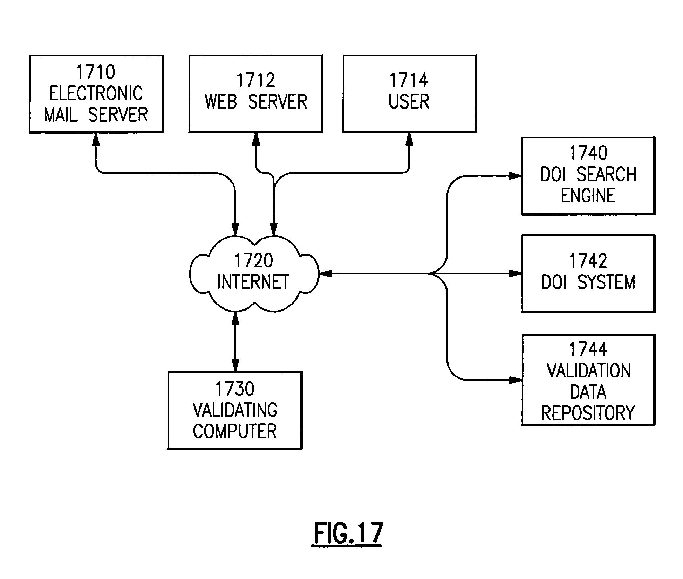

Figure **17** illustrates the integration of a validation architecture into the digital rights management scenario shown in Figure **14****.** Validating computer **1730** retrieves a digital work such as protected work **1413** via a network such as Internet **1720.** The digital work can originate from an electronic transfer source including electronic mail server **1710,** web server **1712,** or another user **1714** computer. Alternatively, validating computer **1730** can receive the digital work by reading the file directly from a physical medium such as a removable disk, memory storage card, or the like.

Software on validating computer **1730** determines the DOI for the work embodied in the file just retrieved. This could be accomplished by any of several methods. First, the DOI could have been retrieved with the file when it was downloaded and stored in memory for validating computer **1730.** Second, the DOI could be extracted from a watermark placed in the file by the publisher of the file. Third, the DOI for the work could be retrieved by a look-up using DOI Search Engine **1740,** using known bibliographic information (title, author, date of publication, etc.), or other metadata for the file (song length, sensory "fingerprint" of image or song file, checksum or hash result for an executable file, etc.).

Software on validating computer **1730** then issues a query to DOI system **1742** to request validation credentials for the work identified by the given DOI. DOI system **1742** either responds with the file's credentials or responds with a pointer (e.g., URL) to the location of those credentials in validation data repository **1744.** The credentials should either be of a known type, or should provide information on how the validation process should proceed.

Validation software executing on validating computer **1730** then performs an analysis of the file originally retrieved to determine whether it matches the validation credentials retrieved. Generally, this involves performing a series of calculations using the original file as an input such that the result of these calculations is of a fixed, short length, and is likely to be different if the file has been modified since it was first published. In this way the user can determine whether the file is an authentic copy of the originally published document. If the file is determined to be an invalid or corrupted version of the work the software can use the discovered DOI to look-up sales outlets and the user can be immediately offered the chance to purchase or acquire a valid copy of the work.

Many straightforward hash algorithms with a very low probability of generating the same output for different inputs exist, such as MD-5 and SHA. In the case of an image, sound, movie or other multimedia file, it may be desirable to use a method of validation that detects differences between files perceptible to humans. In this way, if a song is copied from a CD by a user, and converted to another file format, the algorithm might still, by using perceptual criteria, determine that the song had not been modified since publication, and validate the work. One such perceptual algorithm is being deployed by Napster today to track which songs being traded on its file-sharing network. More detailed information on Napster's perceptual algorithm can be found at "www.relatable.com/news/pressreleases/010420.release.html".

Although the embodiments disclosed herein describe a fully functioning apparatus, method, and system for accessing a digitized work of authorship protected by a digital rights management system, the reader should understand that other equivalent embodiments exist. Since numerous modifications and variations will occur to those who review this disclosure, the apparatus, method, and system for accessing a digitized work of authorship protected by a digital rights management system is not limited to the exact construction and operation illustrated and disclosed herein. Accordingly, this disclosure intends all suitable modifications and equivalents to fall within the scope of the claims.

### Multiple Resolution Menu Facility (MRMF)

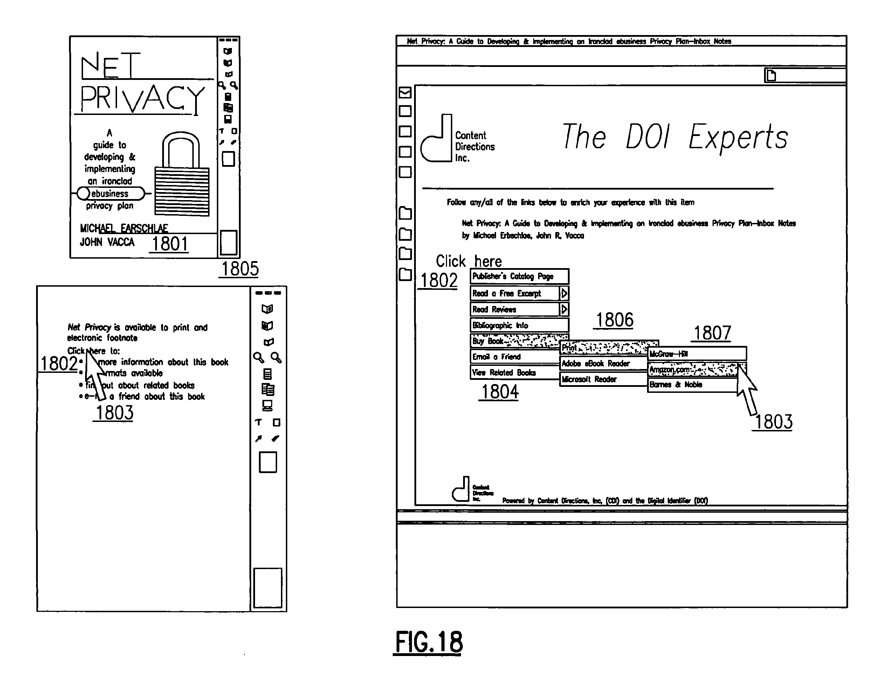

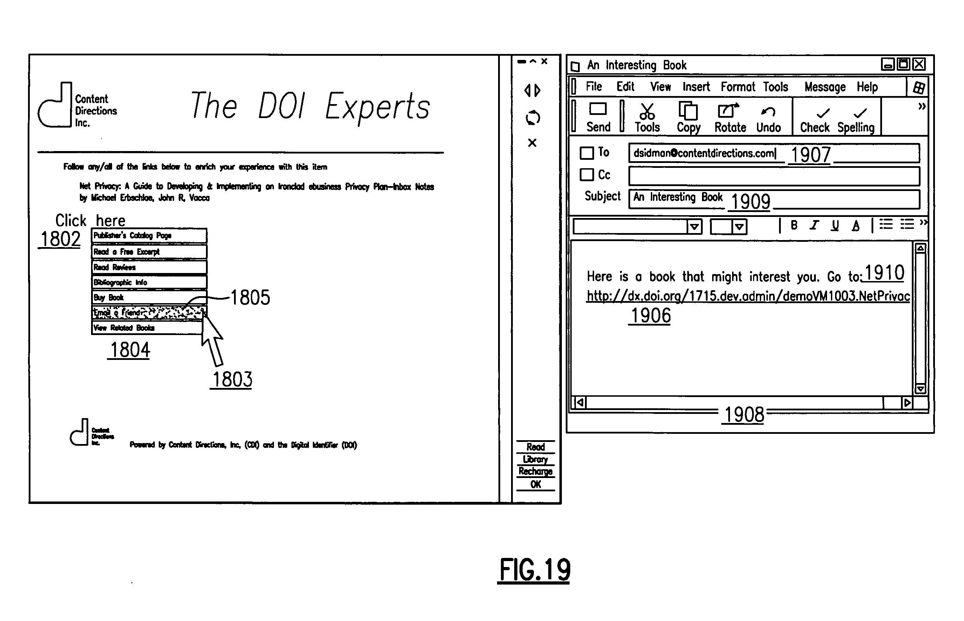

Figures 18 and 19 illustrate a schematic diagram of one non-limiting example embodiment of an interactive interface multiple resolution menu facility (MRMF). In Figure 18, a DOI may be provided in any number of manners to a user. In one example, a DOI is embedded in a Portable Document Format (PDF) 1801 and viewed in an Electronic Book (e-book) reader 1805 such as Adobe's Acrobat, Adobe's E-book Reader, Microsoft's E-book Reader, and/or the like. The DOI 1802 (e.g., in Figure 18, the DOI is the highlighted text "Click here," which may actually embed a DOI number and/or reference as metadata that is presented to the user as the highlighted text) may be engaged by a user selection facility such as but not limited to a pointing cursor 1803. By selecting the DOI 1802, an interactive interface menu is generated 1804. The MRMF may be implemented as a module using a number of standard development tools such as, but not limited to: C, C++, Java, Javascript, Objective-C, Perl, Python, and/or the like. The MRMF may be integrated into the DRMS controller's user interface. In an alternative embodiment, the MRMF may be implemented as a plug-in for a viewing application such as, but not limited to: Adobe's Acrobat, Adobe's E-book Reader, Microsoft's E-book Reader, Microsoft Explorer, Microsoft Internet Explorer, Netscape Navigator, and/or the like. The MRMF module logic generally is engaged upon being loaded by a viewing application and more specifically when the user selects a DOI 1802.

Upon engaging the DOI 1802 with a cursor 1803, the MRMF obtains a list of multiple resolution options for display and further selection. The list may be generated by reading the DOI embedded into the document and resolving the DOI with a DOI resolution server. In one example, an enhanced DOI grammar may be employed to poll all multiple resolution options from the DOI resolution server, e.g., poll.allResolutions@DOI, poll.allAcmeIncResolutions@DOI. The DOI resolution server will then return a list of all and/or some resolution options stored within the record for the particular DOI from the DOI resolution server. Upon obtaining this list from the DOI resolution server, the MRMF will parse the results if needed and generate a menu list corresponding to the resolution options returned from the DOI resolution server 1804.

Upon displaying the list of options to a user 1804, the user may continue and select any of the displayed options in the option expanded MRMF. Thereafter the user may select one of the displayed multiple resolution options presented in the option expanded MRMF, e.g., by clicking a mouse button on a mouse to engage the cursor's selection engagement mechanism 1806, 1807. It should be noted that a menu hierarchy 1804, 1806, 1807 may be constructed by parsing the results of the DOI resolution server poll, wherein the results obtained have common headers; e.g., the DOI resolution server may return poll results in the form of enhanced DOIs such as BuyBook.Print@DOI, BuyBook.AdobeEBookReader@DOI, and BuyBook.MicrosoftReader@DOI, which may all be parsed to build a menu with a root of "BuyBook" and sub-menus "Print," "AdobeEBook," and "MicrosoftReader." It should be further noted that the poll results from the DOI resolution server may themselves be DOIs, wherein the MRMF may then further recursively poll based on such DOI poll results thereby building up a larger menu of multiple resolution options for a user. By engaging one of the options, the MRMF initiates a specific DOI resolution to the multiple resolution option that was selected by the user. For example, by selecting an option to "Buy Book" 1804, "Print" 1806, and "Amazon.com" 1807, 1803, the MRMF will resolve an option to a web page on Amazon.com where a printed version (and/or any other specified versions) of the information represented by the DOI may be purchased.

In Figure 19, in one example embodiment, the MRMF further presents the user with an "E-mail a Friend" option 1805. If the user engages the "E-mail a Friend" option 1805, the MRMF will generate a signal to generate a new E-mail to the operating system. The MRMF may generate a signal by employing any number of system APIs such as those in win32 development libraries, Lotus Notes APIs, Microsoft Outlook Express APIs, Microsoft Outlook Express APIs, and/or the like. The MRMF makes a call through the proper API requesting (the launch and instantiation of an E-mail application if necessary and) the instantiation of a new E-mail window 1908. The MRMF will instruct an instantiated E-mail application via its API to create a new E-mail message with a copy of the DOI 1906 from which the user made a selection. Thereafter, the user may address the E-mail to a his/her friend's E-mail address 1907 (or to any other recipients, e.g., a distribution list) along with any desired comments 1909, 1910 and send the DOI via E-mail for another user to interact with the DOI.

In one example embodiment, the new E-mail message is automatically generated and an MRMF plug-in is attached to the E-mail message with instructions to install the plug-in and thus enable MRMF facilities where they were absent. In another embodiment, the DOI is embedded as a hyperlink which allows a designated server to provide the MRMF functionality, e.g., http://www.doiResolutionReRoutingServer.com/poll.allResolutions@DOI. In yet another embodiment, the MRMF functionality is provided by a server to the user's device by downloading a module from a designated server, e.g., as Javascript, as a window engaged in communications with a server, and/or the like.

The following numbered clauses correspond to the claims of the parent application and are presented here to preserve all of the subject matter of the parent filing. Accordingly, these numbered clauses set out aspects and features of the present disclosure.
1. A method of accessing a digital work from a computer comprising:
   selecting an unique, persistent, and universal name identifier for the digital work;
   associating at least one usage right with the digital work to create a protected digital work;
   storing the protected digital work and the unique, persistent, and universal name identifier in a directory that maintains universal resource names and locations for information associated with the universal resource names;
   issuing a query from the computer to the directory to generate a result set that includes the unique, persistent, and universal name identifier; and
   retrieving from the directory the protected digital work with the unique, persistent, and universal name identifier.
2. The method of clause 1, wherein the unique, persistent, and universal name identifier is a digital object identifier (DOI).
3. The method of clause 1, wherein said at least one usage right allows a user to perform an action on the digital work with the computer.
4. The method of clause 3, wherein the action is to display the digital work.
5. The method of clause 3, wherein the action is to copy the digital work.
6. The method of clause 3, wherein the action is to forward the digital work to another computer.
7. The method of clause 3, wherein the action is to print the digital work.
8. The method of clause 1, wherein after the associating, the method further comprises:
   encrypting the protected digital work.
9. The method of clause 1, wherein after the associating, the method further comprises:
   wrapping the protected digital work by encasing the digital work in a secure container.
10. The method of clause 9, wherein the secure container includes a digital watermark.
11. The method of clause 10, wherein the digital watermark includes the unique, persistent, and universal name identifier.
12. The method of clause 1, further comprising:
   storing metadata that describes the protected digital work and the unique, persistent, and universal name identifier.
13. The method of clause 12, wherein the query includes the metadata.
14. The method of clause 1, wherein the computer is a mobile device.
15. The method of clause 1, wherein the directory is a catalog that indexes digital works of authorship.
16. The method of clause 1, wherein the directory is part of a peer-to-peer network.
17. The method of clause 1, wherein a content distributor, a content syndicator, or a content aggregator issues the query on behalf of the computer.
18. A method of accessing a digital work associated with a unique, persistent, and universal name identifier, a protected digital work received from another computer, the protected digital work including the digital work and at least one usage right associated with the digital work, comprising:
   issuing a query from the computer to a directory, that maintains universal resource names and locations for information associated with the universal resource names, to generate a result set that includes the unique, persistent, and universal name identifier;
   establishing a connection to a rights clearinghouse to validate the protected digital work;
   receiving a key in response to a successful financial transaction; and
   accessing the digital work by performing an action allowed by said at least one usage right on the protected digital work with the key.
19. The method of clause 18, wherein the unique, persistent, and universal name identifier is a digital object identifier (DOI).
20. The method of clause 18, wherein the rights clearinghouse updates a reporting log.
21. The method of clause 20, wherein the reporting log includes sales data.
22. The method of clause 20, wherein the reporting log includes customer data.
23. The method of clause 20, wherein the reporting log is in an electronic form and the rights clearinghouse periodically sends reporting log to a publisher of the digital work.
24. A method of accessing a digital work associated with a unique, persistent, and universal name identifier, comprising:
   issuing a query from the computer to a directory, that maintains universal resource names and locations for information associated with the universal resource names, to obtain a list of reference options;
   receiving query results from the directory;
   building a menu based on the query results; and
   displaying the menu, wherein the menu may be engaged by a user to select and access a specific reference option.
25. The method of clause 24, further comprising displaying a menu option to send the unique, persistent, and universal name identifier via E-mail, wherein selecting the send E-mail option instantiated a new E-mail with the universal resource name embedded within the new E-mail.
26. A system for accessing a digital work from a computer comprising:
   means to select an unique, persistent, and universal name identifier for the digital work;
   means to associate at least one usage right with the digital work to create a protected digital work;
   means to store the protected digital work and the unique, persistent, and universal name identifier in a directory that maintains universal resource names and locations for information associated with the universal resource names;
   means to issue a query from the computer to the directory to generate a result set that includes the unique, persistent, and universal name identifier; and
   means to retrieve from the directory the protected digital work with the unique, persistent, and universal name identifier.
27. The system of clause 26, wherein the unique, persistent, and universal name identifier is a digital object identifier (DOI).
28. The system of clause 26, wherein said at least one usage right allows a user to perform an action on the digital work with the computer.
29. The system of clause 28, wherein the action is to display the digital work.
30. The system of clause 28, wherein the action is to copy the digital work.
31. The system of clause 28, wherein the action is to forward the digital work to another computer.
32. The system of clause 28, wherein the action is to print the digital work.
33. The system of clause 26, wherein after the associating, the system further comprises:
   means to encrypt the protected digital work.
34. The system of clause 26, wherein after the associating, the system further comprises:
   means to wrap the protected digital work by encasing the digital work in a secure container.
35. The system of clause 34, wherein the secure container includes a digital watermark.
36. The system of clause 35, wherein the digital watermark includes the unique, persistent, and universal name identifier.
37. The system of clause 26, further comprising:
   means to store metadata that describes the protected digital work and the unique, persistent, and universal name identifier.
38. The system of clause 37, wherein the query includes the metadata.
39. The system of clause 26, wherein the computer is a mobile device.
40. The system of clause 26, wherein the directory is a catalog that indexes digital works of authorship.
41. The system of clause 26, wherein the directory is part of a peer-to-peer network.
42. The system of clause 26, wherein a content distributor, a content syndicator, or a content aggregator issues the query on behalf of the computer.
43. A system for accessing a digital work associated with a unique, persistent, and universal name identifier, a protected digital work received from another computer, the protected digital work including the digital work and at least one usage right associated with the digital work, comprising:
   means to issue a query from the computer to a directory, that maintains universal resource names and locations for information associated with the universal resource names, to generate a result set that includes the unique, persistent, and universal name identifier;
   means to establish a connection to a rights clearinghouse to validate the protected digital work;
   means to receive a key in response to a successful financial transaction; and
   means to access the digital work by performing an action allowed by said at least one usage right on the protected digital work with the key.
44. The system of clause 43, wherein the unique, persistent, and universal name identifier is a digital object identifier (DOI).
45. The system of clause 43, wherein the rights clearinghouse updates a reporting log.
46. The system of clause 45, wherein the reporting log includes sales data.
47. The system of clause 45, wherein the reporting log includes customer data.
48. The system of clause 45, wherein the reporting log is in an electronic form and the rights clearinghouse periodically sends reporting log to a publisher of the digital work.
49. A system for accessing a digital work associated with a unique, persistent, and universal name identifier, comprising:
   means to issue a query from the computer to a directory, that maintains universal resource names and locations for information associated with the universal resource names, to obtain a list of reference options;
   means to receive query results from the directory;
   means to build a menu based on the query results; and
   means to display the menu, wherein the menu may be engaged by a user to select and access a specific reference option.
50. The system of clause 49, further comprising displaying a menu option to send the unique, persistent, and universal name identifier via E-mail, wherein selecting the send E-mail option instantiated a new E-mail with the universal resource name embedded within the new E-mail.
51. A program stored on a medium readable by a processor, the program, comprising:
   a module to select an unique, persistent, and universal name identifier for the digital work;
   a module to associate at least one usage right with the digital work to create a protected digital work;
   a module to store the protected digital work and the unique, persistent, and universal name identifier in a directory that maintains universal resource names and locations for information associated with the universal resource names;
   a module to issue a query from the computer to the directory to generate a result set that includes the unique, persistent, and universal name identifier; and
   a module to retrieve from the directory the protected digital work with the unique, persistent, and universal name identifier.
52. The medium of clause 51, wherein the unique, persistent, and universal name identifier is a digital object identifier (DOI).
53. The medium of clause 51, wherein said at least one usage right allows a user to perform an action on the digital work with the computer.
54. The medium of clause 53, wherein the action is to display the digital work.
55. The medium of clause 53, wherein the action is to copy the digital work.
56. The medium of clause 53, wherein the action is to forward the digital work to another computer.
57. The medium of clause 53, wherein the action is to print the digital work.
58. The medium of clause 51, wherein after the associating, the medium further comprises:
   a module to encrypt the protected digital work.
59. The medium of clause 51, wherein after the associating, the medium further comprises:
   a module to wrap the protected digital work by encasing the digital work in a secure container.
60. The medium of clause 59, wherein the secure container includes a digital watermark.
61. The medium of clause 60, wherein the digital watermark includes the unique, persistent, and universal name identifier.
62. The medium of clause 51, further comprising:
   a module to store metadata that describes the protected digital work and the unique, persistent, and universal name identifier.
63. The medium of clause 62, wherein the query includes the metadata.
64. The medium of clause 51, wherein the computer is a mobile device.
65. The medium of clause 51, wherein the directory is a catalog that indexes digital works of authorship.
66. The medium of clause 51, wherein the directory is part of a peer-to-peer network.
67. The medium of clause 51, wherein a content distributor, a content syndicator, or a content aggregator issues the query on behalf of the computer.
68. A program stored on a medium readable by a processor for accessing a digital work associated with a unique, persistent, and universal name identifier, a protected digital work received from another computer, the protected digital work including the digital work and at least one usage right associated with the digital work, the program, comprising:
   a module to issue a query from the computer to a directory, that maintains universal resource names and locations for information associated with the universal resource names, to generate a result set that includes the unique, persistent, and universal name identifier;
   a module to establish a connection to a rights clearinghouse to validate the protected digital work;
   a module to receive a key in response to a successful financial transaction; and
   a module to access the digital work by performing an action allowed by said at least one usage right on the protected digital work with the key.
69. The medium of clause 68, wherein the unique, persistent, and universal name identifier is a digital object identifier (DOI).
70. The medium of clause 68, wherein the rights clearinghouse updates a reporting log.
71. The medium of clause 70, wherein the reporting log includes sales data.
72. The medium of clause 70, wherein the reporting log includes customer data.
73. The medium of clause 70, wherein the reporting log is in an electronic form and the rights clearinghouse periodically sends reporting log to a publisher of the digital work.
74. A program stored on a medium readable by a processor for accessing a digital work associated with a unique, persistent, and universal name identifier, the program, comprising:
   a module to issue a query from the computer to a directory, that maintains universal resource names and locations for information associated with the universal resource names, to obtain a list of reference options;
   a module to receive query results from the directory;
   a module to build a menu based on the query results; and
   a module to display the menu, wherein the menu may be engaged by a user to select and access a specific reference option.
75. The medium of clause 74, further comprising displaying a menu option to send the unique, persistent, and universal name identifier via E-mail, wherein selecting the send E-mail option instantiated a new E-mail with the universal resource name embedded within the new E-mail.
76. An apparatus, comprising:
   a processor;
   a memory, communicatively connected to the processor,
   a program, stored in the memory, including"
      a module to select an unique, persistent, and universal name identifier for the digital work;
      a module to associate at least one usage right with the digital work to create a protected digital work;
      a module to store the protected digital work and the unique, persistent, and universal name identifier in a directory that maintains universal resource names and locations for information associated with the universal resource names;
      a module to issue a query from the computer to the directory to generate a result set that includes the unique, persistent, and universal name identifier; and
      a module to retrieve from the directory the protected digital work with the unique, persistent, and universal name identifier.
77. The apparatus of clause 76, wherein the unique, persistent, and universal name identifier is a digital object identifier (DOI).
78. The apparatus of clause 76, wherein said at least one usage right allows a user to perform an action on the digital work with the computer.
79. The apparatus of clause 78, wherein the action is to display the digital work.
80. The apparatus of clause 78, wherein the action is to copy the digital work.
81. The apparatus of clause 78, wherein the action is to forward the digital work to another computer.
82. The apparatus of clause 78, wherein the action is to print the digital work.
83. The apparatus of clause 76, wherein after the associating, the apparatus further comprises:
   a module to encrypt the protected digital work.
84. The apparatus of clause 76, wherein after the associating, the apparatus further comprises:
   a module to wrap the protected digital work by encasing the digital work in a secure container.
85. The apparatus of clause 84, wherein the secure container includes a digital watermark.
86. The apparatus of clause 85, wherein the digital watermark includes the unique, persistent, and universal name identifier.
87. The apparatus of clause 76, further comprising:
   a module to store metadata that describes the protected digital work and the unique, persistent, and universal name identifier.
88. The apparatus of clause 87, wherein the query includes the metadata.
89. The apparatus of clause 76, wherein the computer is a mobile device.
90. The apparatus of clause 76, wherein the directory is a catalog that indexes digital works of authorship.
91. The apparatus of clause 76, wherein the directory is part of a peer-to-peer network.
92. The apparatus of clause 76, wherein a content distributor, a content syndicator, or a content aggregator issues the query on behalf of the computer.
93. An apparatus, comprising:
   a processor;
   a memory, communicatively connected to the processor,
   a program, stored in the memory, the program for accessing a digital work associated with a unique, persistent, and universal name identifier, a protected digital work received from another computer, the protected digital work including the digital work and at least one usage right associated with the digital work, the program, including,
      a module to issue a query from the computer to a directory, that maintains universal resource names and locations for information associated with the universal resource names, to generate a result set that includes the unique, persistent, and universal name identifier;
      a module to establish a connection to a rights clearinghouse to validate the protected digital work;
      a module to receive a key in response to a successful financial transaction; and
      a module to access the digital work by performing an action allowed by said at least one usage right on the protected digital work with the key.
94. The apparatus of clause 93, wherein the unique, persistent, and universal name identifier is a digital object identifier (DOI).
95. The apparatus of clause 93, wherein the rights clearinghouse updates a reporting log.
96. The apparatus of clause 95, wherein the reporting log includes sales data.
97. The apparatus of clause 95, wherein the reporting log includes customer data.
98. The apparatus of clause 95, wherein the reporting log is in an electronic form and the rights clearinghouse periodically sends reporting log to a publisher of the digital work.
99. An apparatus, comprising:
   a processor;
   a memory, communicatively connected to the processor,
   a program, stored in the memory, the program for accessing a digital work associated with a unique, persistent, and universal name identifier, the program, including,,
      a module to issue a query from the computer to a directory, that maintains universal resource names and locations for information associated with the universal resource names, to obtain a list of reference options;
      a module to receive query results from the directory;
      a module to build a menu based on the query results; and
      a module to display the menu, wherein the menu may be engaged by a user to select and access a specific reference option.
100. The apparatus of clause 99, further comprising displaying a menu option to send the unique, persistent, and universal name identifier via E-mail, wherein selecting the send E-mail option instantiated a new E-mail with the universal resource name embedded within the new E-mail.

## Claims

1. A method of accessing a digital work from a computer comprising:
selecting an unique, persistent, and universal name identifier for the digital work;
associating at least one usage right with the digital work to create a protected digital work, wherein said at least one usage right allows a user to perform an action on the digital work with the computer;
wrapping the protected digital work by encasing the digital work in a secure container;
storing the protected digital work and the unique, persistent, and universal name identifier in a directory that maintains universal resource names and locations for information associated with the universal resource names;
storing metadata that describes the protected digital work and the unique, persistent, and universal name identifier;
issuing a query from the computer to the directory to generate a result set that includes the unique, persistent, and universal name identifier, wherein the query includes the metadata; and
retrieving from the directory the protected digital work with the unique, persistent, and universal name identifier.

2. The method of claim 1, wherein after the associating, the method further comprises:
encrypting the protected digital work.

3. The method of claim 1, wherein the secure container includes a digital watermark.

4. The method of claim 3, wherein the digital watermark includes the unique, persistent, and universal name identifier.

5. The method of claim 1, wherein the directory is a catalog that indexes digital works of authorship.

6. The method of claim 1, wherein the directory is part of a peer-to-peer network.

7. The method of claim 1, wherein a content distributor, a content syndicator, or a content aggregator issues the query on behalf of the computer.

8. A program stored on a medium readable by a processor, the program comprising instructions to implement the method of any preceding claim.

9. A system or apparatus arranged to perform the method of any of claims 1 to 7.
